# EUROPÄISCHE PATENTSCHRIFT

(11) **EP 0 948 441 B1**
(45) Veröffentlichungstag und Bekanntmachung des Hinweises auf die Patenterteilung: **02.10.2002**
(21) Anmeldenummer: 98904030.8
(22) Anmeldetag: 02.01.1998
(51) Int. Cl.: B64B 1/30, B64B 1/06

(54) **LUFTFAHRZEUG MIT EINEM IM WESENTLICHEN ALS AEROSTATISCHEM AUFTRIEBSKÖRPER AUSGEBILDETEN RUMPF**
AIRCRAFT WITH A FUSELAGE SUBSTANTIALLY DESIGNED AS AN AEROSTATIC LIFTING BODY
AERONEF AVEC UN FUSELAGE EN FORME DE CORPS AERODYNAMIQUE DE SUSTENTATION

(30) Priorität: 04.01.1997 DE 19700182
(43) Veröffentlichungstag der Anmeldung: 13.10.1999
(60) Teilanmeldung: 01122153.8
(73) Patentinhaber: Econoflug AG, 50674 Köln (DE); Künkler, Hermann, 85521 Ottobrunn (DE)
(72) Erfinder: KÜNKLER, Hermann, D-85521 Ottobrunn (DE)
(74) Vertreter: Schlimme, Wolfram, Dr.-Ing.
(86) Internationale Anmeldenummer: EP9800015
(87) Internationale Veröffentlichungsnummer: WO98029303

(56) Entgegenhaltungen:
- DE-A- 2 659 401
- DE-A- 3 508 100
- DE-A- 4 132 718
- DE-C- 210 003
- FR-A- 1 391 203
- FR-A- 2 286 053
- GB-A- 1 561 057
- GB-A- 2 197 276
- US-A- 3 486 717
- US-A- 4 995 572
- DATABASE WPI Section PQ, Week 9435 19. Oktober 1994 Derwent Publications Ltd., London, GB; Class Q25, AN 94-284236 XP002066074 & RU 2 009 073 C (BIRYULEV V I) , 15. März 1994
- FORD T: "THE TILT-ROTOR IN EUROPE" AIRCRAFT ENGINEERING, Bd. 61, Nr. 6, 1. Juni 1989, Seiten 27-29, XP000069648

## Beschreibung

Die Erfindung betrifft ein Luftfahrzeug mit einem im wesentlichen als aerostatischem Auftriebskörper ausgebildeten Rumpf gemäß dem Oberbegriff des Anspruchs 1. Außerdem betrifft die Erfindung ein Verfahren zur Steuerung eines Luftfahrzeugs mit Propellerantrieb gemäß dem Oberbegriff des Anspruchs 13.

Ein gattungsgemäßes Luftfahrzeug, eine gattungsgemäße Antriebseinheit und ein gattungsgemäßes Verfahren werden unter Verweis auf die US-A-4,591,112 in der US-A-4,995,572 erwähnt. Die US-A-4,591,112 offenbart ein Luftschiff, das über ein Traggerüst links und rechts jeweils mit einem vorderen und einem hinteren Hubschrauberantrieb versehen ist, wobei jeder Hubschrauberantrieb aus einer Position mit horizontaler Rotorebene in Positionen mit 30° nach rückwärts oder 60° nach vorwärts um eine Achse parallel zur Nickachse des Luftschiffs kippbar ist. Auf diese Weise soll das Luftschiff mittels des Hubschrauberantriebs nicht nur in vertikaler Richtung aufsteigen sondern auch - wie dies bei einem Hubschrauber üblich ist - in horizontaler Richtung vorwärts oder rückwärts manövrierbar sein. Dabei kippt jeweils die gesamte Antriebseinheit gegen die während des Kippens auftretenden Kreiselmomente des Gesamtantriebs einschließlich der Antriebsmotoren um eine Achse parallel zur Nickachse. Die dort verwendeten Hubschrauberantriebe dienen zur Erzeugung einer Auftriebskraft, einer Vorschubkraft sowie zum Trimmen und zum Erzeugen von Steuerkräften des Luftschiffs. Zur Lateralsteuerung, das heißt zur Steuerung des Luftschiffs um die Hochachse, kann die Ebene der Hubschrauberrotoren durch "lateral cyclic pitch" um einen kleinen Winkel seitlich geneigt werden oder der Lateralsteuerung dienen an den Antriebseinheiten vorgesehene Heckrotoren, die den Heckrotoren von Helikoptern entsprechen, die aber einen Lateralschub in beide Lateralrichtungen erzeugen können. Der Lateraltrimm wird durch Kippen der gesamten Antriebseinheit um eine Achse parallel zur Längsachse durchgeführt. Das aus der US-A-4,591,112 bekannte Luftfahrzeug ist mit schwingungstechnisch und hinsichtlich der Blattanlenkung komplexen Hubschrauberrotoren versehen, und nicht, wie dies in der vorliegenden Patentanmeldung der Fall ist, mit Propellern, deren Propellerebene separat neigbar ist ohne daß der Gesamtantrieb einschließlich der Antriebsmotoren gegen deren Kreiselmomente gekippt werden muß. Insbesondere besitzt ein Hubschrauber-Rotorantrieb wie im Stand der Technik erläutert keine "Propellerrotationsebene", bei der alle Massenpunkte der Rotorblätter auch dann in einer Ebene und mit konstanter Winkelgeschwindigkeit umlaufen, wenn die Rotorblätter gegenüber der Antriebswelle gekippt sind.

Mit Translationsantrieben versehene aerostatische Luftfahrzeuge sind beispielsweise als Zeppeline seit langem bekannt. Diese Luftschiffe können aufgrund ihres aerostatischen Auftriebsverhaltens im wesentlichen vertikal starten und landen, müssen jedoch, da sie überwiegend leichter als Luft sind, bei jedem Halt am Boden gefesselt werden. Außerdem sind diese Luftfahrzeuge verhältnismäßig träge steuerbar, da sie aufgrund ihrer langsamen Geschwindigkeit und ihrer kleinen aerodynamischen Steuerflächen eine geringe Steuerautorität, das heißt eine große Reaktionsträgheit auf Steuerbewegungen, aufweisen. Zwar sind in jüngster Zeit Luftschiffe mit um eine Querachse vergleichsweise langsam kippbaren Hauptantrieben und lateral wirkenden Hilfsantrieben zur Unterstützung der aerodynamischen Steuerung bekannt geworden, die den Wendekreis eines Luftschiffs zwar verringern, aber keine "punktgenaue" Manövrierbarkeit des Luftschiffs gestatten. Ein weiterer Nachteil von Luftschiffen mit gestreckter Stromlinienkörperform ist ihre extrem hohe Seitenwindempfindlichkeit und das damit verbundene Erfordernis, das Luftschiff am Boden so zu fesseln, daß es sich wie ein Boot an einer Boje in den Wind drehen kann, wozu im allgemeinen Ankermasten erforderlich sind.

Weiterhin sind senkrecht startende Flugzeuge bekannt, deren Triebwerke aus einer vertikalen Auftriebsstellung mit horizontaler Propellerrotationsebene und einer horizontalen Vortriebstellung mit vertikaler Propellerrotationsebene kippbar sind. Ein Problem bei diesen senkrecht startenden Flugzeugen mit kippbaren Triebwerken ist die Beherrschung der beim Kippen der Triebwerke entstehenden Kreiselkräfte, die über stabile Stützstrukturen an den Flugzeugtragflächen und am Rumpf abgestützt werden müssen. Wegen dieser Kreiselkräfte kann das Kippen der Triebwerke nur verhältnismäßig langsam erfolgen. Gesteuert werden diese senkrecht startenden Flugzeuge im wesentlichen ebenfalls über aerodynamische Steuereinrichtungen. Da beim senkrechten Start dieser Flugzeuge die Triebwerke allein den Auftrieb des gesamten Luftfahrzeugs bewirken müssen, ist die zusätzlich zum Eigengewicht des Luftfahrzeugs transportierbare Last sehr begrenzt.

Es ist daher die Aufgabe der vorliegenden Erfindung, ein gattungsgemäßes Luftfahrzeug zu schaffen, das die Vorteile eines aerostatischen Luftfahrzeugs und die Vorteile eines senkrecht startenden Flugzeugs in sich vereint und das somit in der Lage ist, große Lasten auch über größere Reichweiten zu transportieren, und das gleichzeitig schnell und zielgenau landen kann, ohne daß es hierfür einer besonderen Infrastruktur am Boden bedarf.

Diese Aufgabe wird bei einem gattungsgemäßen Luftfahrzeug durch die im kennzeichnenden Teil des Anspruchs 1 angegebenen Merkmale gelöst.

Die Rundum-Neigbarkeit der Propellerrotationsebene zusätzlich zur grundsätzlich vorgesehenen Kippbarkeit des Antriebs um eine Querachse ermöglicht eine Schubvektorsteuerung des Luftfahrzeugs, die reaktionsschnell wirkt und die dem Luftfahrzeug auch bei Start und Landung ein sehr agiles Steuerverhalten verschafft. Durch diese Schubvektorsteuerung ist es möglich (ausreichende Antriebsleistung vorausgesetzt), das mit einem als aerostatischem Auftriebskörper versehene Luftfahrzeug im wesentlichen punktgenau zu landen. Hierdurch wird der Vorteil erzielt, daß das Luftfahrzeug unmittelbar auf verhältnismäßig kleinen Außenlandeplätzen niedergehen kann und so beispielsweise eine Last auf einem Fabrikhof aufnehmen und direkt beim Empfänger wieder absetzen kann.

Die Neigung der Rotorebene erfolgt aufgrund von an den Propellerblättern angreifenden aerodynamischen Kräften als Folge einer individuellen Verstellung des jeweiligen Anstellwinkels der einzelnen Propellerblätter. Dabei wird nur der Schubvektor für Vortrieb, Hub und Steuerung als Kraft in den Rumpf eingeleitet. Reaktionsmomente, die bei einem schnellen Aufbau des Schubvektors auftreten, zum Beispiel Kreiselmomente einer zugeordneten Antriebsmaschine oder des Propellers, stützen sich auf der umgebenden Luft und nicht auf der Struktur des Luftfahrzeugs ab. Auf diese Weise ist die Propellerebene gegenüber der Abtriebswelle auch über einen großen winkelbereich in jede Richtung sehr schnell neigbar, ohne daß dabei von Kreiselmomenten herrührende Reaktionskräfte auf den Rumpf übertragen werden müssen. Der Neigungswinkel der Propellerrotationsebene bezüglich der die Propellerwelle beaufschlagenden Abtriebswelle des zugeordneten Antriebs kann zwischen ± 20° und ± 50°, vorzugsweise zwischen ± 25° und ± 35° und weiter bevorzugt ± 30° betragen. Da die Schubvektorsteuerung des erfindungsgemäßen Luftfahrzeugs sowohl in der Vortriebsposition als auch in der Auftriebsposition der Antriebseinheiten arbeitet, ist für kurze Landestops mit laufenden Antrieben keine aufwendige Fesselung des Luftfahrzeugs am Boden erforderlich, da die schnell reagierende Schubvektorsteuerung eine Lagestabilisierung des Luftfahrzeugs am Landeplatz auch bei Seitenwind oder Windböen gestattet. Hierdurch wird das erfindungsgemäße Luftfahrzeug unabhängig von Landeplattformen oder sonstigen am Boden vorgesehenen Landevorrichtungen wie beispielsweise Ankern für die Befestigung von Fesselleinen für das Luftfahrzeug. Trotzdem kann es insbesondere bei längeren Aufenthalten des Luftfahrzeugs, bei denen die Triebwerke abgeschaltet werden, erforderlich sein, das Luftfahrzeug in bekannter Weise am Boden zu fesseln. Dies kann durch die Verankerung eines vorzugsweise an der Unterseite des Luftfahrzeugs integrierten Landefußes oder mittels eines in den Rumpf integrierten Seilwindensystems, das bevorzugt zentral ansteuerbar ist, erfolgen. Die reaktionsschnelle Schubvektorsteuerung des erfindungsgemäßen Luftfahrzeugs erlaubt auch die Aufnahme und das punktgenaue Absetzen einer Last aus dem Schwebezustand des Luftfahrzeugs heraus, ohne daß es selbst landen muß.

In einer besonders bevorzugten Ausgestaltung des erfindungsgemäßen Luftfahrzeugs ist der Rumpf zugleich als aerodynamischer Auftriebskörper gestaltet. Hierdurch kann der Rumpf im Reiseflug zusätzlich zum aerostatischen Auftrieb auch eine aerodynamische Auftriebskraft erzeugen.

Beim erfindungsgemäßen Luftfahrzeug können vom Flugstaudruck abhängige aktiv betätigbare aerodynamische Steuervorrichtungen entfallen, sodaß keine Höhen- oder Seitenleitwerke vorgesehen sein müssen, die die Seitenwindempfindlichkeit und die Böenempfindlichkeit des Luftfahrzeugs erhöhen würden, obwohl sie im Flug mit niedriger Geschwindigkeit in der Startphase und in der Landephase keine wesentliche Mitwirkung an der Steuerung des Luftfahrzeugs haben, weshalb diese ausschließlich von der Schubvektorsteuerung übernommen wird. Das Luftfahrzeug kann hierdurch in konsequent einfacher Formgebung ausgeführt werden.

Weist der Rumpf einen im wesentlichen kreisförmigen Grundriß auf, so wird einerseits bei gleicher Länge aufgrund des größeren Volumens gegenüber der zigarrenartigen Gestalt eines Luftschiffs herkömmlicher Bauart ein wesentlich erhöhter Auftrieb erzielt, was mittelbar zu einer höheren Nutzlast führt, und andererseits wird bei gleichem Volumen die benetzte Oberfläche der Außenhaut herabgesetzt, was zu einer Gewichtsreduzierung führt und den Reibungswiderstand verringert. Außerdem wird dadurch die Seitenwindempfindlichkeit wesentlich reduziert.

Vorteilhaft ist dabei, wenn der Rumpf einen im wesentlichen elliptischen Querschnitt aufweist, wodurch der Strömungswiderstand im Horizontalflug deutlich herabgesetzt ist.

Besitzt der Rumpfquerschnitt die Gestalt einer asymmetrischen, im wesentlichen elliptischen Form, wobei der obere Teil eine Oberschale bildet, die stärker gewölbt ist als der flachere, eine Unterschale bildende untere Teil, so trägt der Rumpf im Reiseflug auch in horizontaler Lage zusätzlich zum aerostatischen Auftrieb mit einem aerodynamischen Auftrieb bei, der den bei Start und Landung genutzten Rotorauftrieb ersetzt. Außerdem führt die unterschiedliche Wölbung zu einer ausgeglicheneren Strukturbelastung in der Oberschale und in der Unterschale des asymmetrischen diskusartigen Rumpfes.

Vorzugsweise weist der Rumpf zumindest einen felgenartigen Versteifungsring im Äquatorialbereich auf, der eine horizontale Aussteifung des Rumpfes bildet, indem er die Radialkräfte der Oberschale und der Unterschale aufnimmt und zusätzlich beispielsweise an der Anströmseite auf den Rumpf auftreffende Staudruckkräfte abstützt.

Dabei ist es insbesondere vorteilhaft, wenn der Versteifungsring im Querschnitt an seinem Außenumfang eine teilelliptische Gestalt aufweist. Hierdurch wird der Versteifungsring im Querschnitt an die Gestalt des Rumpfquerschnitts im Äquatorialbereich angepaßt.

Weiter vorteilhaft ist die Ausgestaltung, bei der der Versteifungsring einen Faserverbundwerkstoff, vorzugsweise in Sandwichbauweise, aufweist. Hierdurch wird bei hoher Festigkeit und niedrigem Gewicht eine gewünschte Elastizität erreicht, die eine Verformung des Versteifungsrings in vorgegebenen Grenzen gestattet. Durch diese elastische Verformung können zum Beispiel von einer Antriebstragstruktur in den Versteifungsring eingeleitete Kräfte und Momente von der Rumpfhüllenstruktur übernommen und weitergeleitet werden, die wegen der größtmöglichen Hebelarme und der natürlichen Formsteifigkeit des unter Druck gesetzten elliptischen diskusartigen Rumpfes hierzu bevorzugt geeignet ist. Die Hauptaufgabe des felgenartigen Versteifungsrings ist die Aufnahme der Radialkräfte aus der Hüllenstruktur zur horizontalen Aussteifung des diskusartigen Rumpfes.

Es ist vorteilhaft, die hieraus resultierenden Druckkräfte von zwei in den Versteifungsring integrierten druckfesten Stützprofilen mit hoher spezifischer Druckfestigkeit aufzunehmen, an denen vorzugsweise auch die Tragstruktur der Oberschale und der Unterschale des Rumpfes verankert ist.

Zur Begrenzung der gewünschten Radialelastizität kann der Versteifungsring zumindest ein vorteilhafterweise als Fachwerkverbund ausgebildetes Stützgerüst aufweisen, das im Querschnitt bevorzugt im wesentlichen dreieckig ausgebildet ist, wobei zwei der Ecken von den in den Versteifungsring integrierten Stützprofilen gebildet sind und die Spitze des Dreiecks zur Rumpfinnenseite weist.

Es ist vorteilhaft, wenn das Stützgerüst zumindest teilweise in den Versteifungsring integriert ist.

Sind gemäß einer weiteren vorteilhaften Ausgestaltung der Erfindung jeweils zwei Antriebseinheiten gemeinsam in einer vorzugsweise unstarr am Rumpf angebrachten Stützstruktur gehaltert, so können Biegemomente, die während der Start- und Landephase aus dem Hubschub des einzelnen Antriebs und der auskragenden Anbringung der Propellerachse resultieren, unmittelbar von einem Triebwerk zum anderen geleitet werden, ohne daß diese Kräfte durch die gesamte Rumpfstruktur übertragen werden müßten. Die beiden Triebwerke stützen sich somit gegenseitig über ihre Stützstruktur ab.

Die jeweiligen Antriebseinheiten und/oder deren Stützstrukturen mit den ihnen zugeordneten Antriebseinheiten sind vorzugsweise über Schubstreben zu einem Antriebstragrahmen unstarr miteinander verkoppelt, der infolge seiner unstarren Verbindungen verschränkbar und verwindbar ist.

Vorzugsweise sind die Antriebseinheiten und/oder deren Stützstrukturen am felgenartigen Versteifungsring unstarr angebracht. Die Antriebseinheiten sind auf diese weise in den Antriebstragrahmen integriert, der unstarr an dem felgenartigen Versteifungsring angebracht ist. Durch diese Ausgestaltung wird erreicht, daß die von den einzelnen Antriebseinheiten ausgehenden Kräfte zum großen Teil über den Antriebstragrahmen weitergeleitet werden und somit der Versteifungsring und die Rumpfhüllenstruktur von der Weiterleitung dieser Kräfte entlastet werden. Zusätzlich wird hierdurch eine schwingungstechnische Entkoppelung unterstützt.

Sind die vorderen Antriebseinheiten und die hinteren Antriebseinheiten jeweils unterschiedlich weit von der Längsmittelebene beabstandet, so wird gewährleistet, daß die hinteren Antriebseinheiten nicht in der Wirbelschleppe der vorderen Antriebseinheiten liegen.

Zusätzlich oder alternativ dazu können die vorderen und die hinteren Antriebseinheiten auch unterschiedlich hoch am Luftfahrzeug angeordnet sein, um dieselbe oder eine noch verbesserte diesbezügliche Wirkung zu erzielen.

Bei einer besonders bevorzugten Ausbildung der Erfindung ist das Luftfahrzeug mit vier Antriebseinheiten versehen, die weiter bevorzugt jeweils paarweise an einer Stützstruktur vorgesehen sind. Vorteilhafterweise ist jeweils eine Antriebseinheit im Bereich einer Ecke eines gedachten, den kreisförmigen Grundriß des Luftfahrzeugs umschließenden oder teilweise durchdringenden Vierecks (oder entsprechend der Anzahl der Antriebseinheiten anderen Vielecks) vorgesehen.

Vorzugsweise sind in jeder Antriebseinheit zwei parallel zueinander betreibbare Antriebsmaschinen vorgesehen.

Hierdurch wird innerhalb jeder einzelnen Antriebseinheit eine Redundanz erzielt, die auch bei Ausfall einer Antriebsmaschine einer Antriebseinheit noch einen zuverlässigen Betrieb der gesamten Antriebseinheit bei nur geringem Gesamtschubverlust gestattet. Hierdurch wird die Betriebssicherheit des Luftfahrzeugs erhöht, da das Risiko eines vollständigen Ausfalls einer gesamten Antriebseinheit wegen der Doppelung der Antriebsmaschinen stark verringert ist. Die Anordnung von vier derartigen Doppel-Antriebseinheiten liefert eine vollständige Antriebsredundanz selbst für den Fall, daß beim Start mit maximaler Abflugmasse, also im Vertikalflug, eine Antriebsmaschine ausfallen sollte. Fällt während des Starts eine vollständige Antriebseinheit aus, so liefern nur zwei diagonal gegenübergelegene Antriebseinheiten Auftrieb und ermöglichen bei maximaler Abflugmasse die Einhaltung einer nur geringen Sinkgeschwindigkeit, wobei die dritte betriebsfähige Antriebseinheit zur Stabilisierung des Luftfahrzeugs um die Rollachse und um die Nickachse eingesetzt wird. Ist bei einem derartigen Antriebsverlust eine ausreichende Flughöhe bereits erreicht worden, kann eine Transition in den Reiseflug durchgeführt werden. Auch im Reiseflug bleibt das in der beanspruchten Weise mit vier Antriebseinheiten versehene Luftfahrzeug bei vollständigem Ausfall einer Antriebseinheit voll flugfähig und manövrierfähig, da gewährleistet ist, daß in diesem Fall auf jeder Seite des Luftfahrzeugs bezüglich der Längsmittelebene noch eine Antriebseinheit funktionsfähig ist, wobei die dritte funktionsfähige Antriebseinheit zur Fluglageregelung mitverwendet wird.

Im unteren Bereich des Rumpfes ist bevorzugt ein Frachtraum für den Transport von Frachtgütern ausgebildet, unter dem ein vorzugsweise plateauartig ausgebildeter Landefuß ausgefahren werden kann.

In einer vorteilhaften Ausführungsform ist der Frachtraum mit zumindest einer Rampe versehen, wobei bevorzugt zwei Rampen an zwei voneinander abgewandten Seiten vorgesehen sein können. Das Vorsehen einer Rampe erleichtert das Beladen und Entladen des Luftfahrzeugs und das Vorsehen von zwei an voneinander abgewandten Seiten gelegenen Rampen gestattet ein schnelleres Be- und Entladen im sogenannten RORO-Betrieb (Roll-On-Roll-Off).

Ist unter dem Frachtraum im Bereich seines Umfangs nach unten gerichtet ein pneumatisch ausfahrbarer, balgartigen Ringwulst als Landefuß vorgesehen, so können durch den von diesem Ringwulst gebildeten Landefuß einerseits Landestöße abgefedert werden und andererseits kann wegen der geringen spezifischen Flächenpressung auch eine Landung auf einem unbefestigten Untergrund erfolgen. Zur Einstellung einer definierten Höhe besitzt der pneumatisch ausfahrbare Ringwulst eine integrierte Höhenbegrenzung.

In einer anderen Ausgestaltung des erfindungsgemäßen Luftfahrzeugs ist im vorderen Teil des Äquatorialbereichs des Rumpfes eine bevorzugt abschnittsweise zweistöckig ausgebildete Passagierkabine vorgesehen, damit das Luftfahrzeug als Passagiertransportmittel eingesetzt werden kann.

Bevorzugt ist dabei die Passagierkabine in den felgenartigen Versteifungsring und vorzugsweise auch in die vordere Stützstruktur des Antriebstragrahmens eingehängt.

Bei einer bevorzugten Ausgestaltung ist im hinteren Teil des Äquatorialbereichs des Rumpfes ein Gepäck- und Frachtraum vorgesehen. Diese Anordnung des Gepäck- und Frachtraums im hinteren Teil des Luftfahrzeugs sorgt zusammen mit der im vorderen Teil des Luftfahrzeugs vorgesehenen Passagierkabine für eine möglichst ausgeglichene Grundtrimmung des Luftfahrzeugs.

Bevorzugt ist der Gepäck- und Frachtraum in den felgenartigen Versteifungsring und vorzugsweise auch in die hintere Stützstruktur des Antriebstragrahmens eingehängt.

Bei einer vorteilhaften Weiterbildung ist in der Unterschale ein in diese integrierter Zentralkörper vorgesehen, an dessen Unterseite bevorzugt ein balgartiger, pneumatisch ausfahrbarer Ringwulst als Landefuß ausgebildet ist.

Ist der Zentralkörper in der von der Oberschale und von der Unterschale gebildeten Hüllenstruktur des Rumpfes derart aufgehängt, daß er bei einer harten Landung nach oben einfedern kann und so ein Durchfedern von Passagierkabine, Gepäck- und Frachtraum und Antriebstragrahmen gestattet, werden Landestöße von der Passagierkabine und damit von den Passagieren sowie auch vom Gepäck- und Frachtraum und vom Antriebstragrahmen ferngehalten.

Vorzugsweise ist der Zentralkörper mit zumindest einer Rampe für den Zugang von außen versehen.

Sind die Passagierkabine und der Gepäck- und Frachtraum über ummantelte Transportstege mit dem Zentralkörper verbunden, so werden gegenüber dem umgebenden Rumpfinnenraum abgeschirmte Verbindungswege zwischen dem Zentralkörper und der Passagierkabine sowie dem Gepäck- und Frachtraum geschaffen. Ist die Verbindung zwischen den Transportstegen und dem Zentralkörper unstarr ausgebildet, so wird das Einfedern des Zentralkörpers ermöglicht. Dabei können zumindest zwei, vorzugsweise drei Transportstege vorgesehen sein.

In einer weiteren bevorzugten Ausführungsform weist der Rumpf eine Tragstruktur und eine Rumpfhülle auf, wobei die Rumpfhülle zumindest abschnittsweise im Bereich der Oberschale beheizbar ist. Diese Beheizung, insbesondere auf der zur Rumpfinnenseite gewandten Seite der Oberschale, bewirkt eine Enteisung der Rumpfhülle, wodurch sich die Betriebssicherheit des Luftfahrzeugs bei Schlecht-Wetter-Einsatz wesentlich erhöht.

Vorteilhafterweise können die beheizbaren Abschnitte der Rumpfhülle doppelwandig ausgebildet sein und von Warmluft oder einem anderen bezüglich der Rumpfumgebung wärmeren Gas bedarfsweise durchströmt werden. Hierzu kann entweder die Abwärme der Triebwerke eingesetzt werden oder es können zusätzliche, unabhängige Heizeinrichtungen vorgesehen sein. Vorteilhaft ist auch, wenn der Druck innerhalb der Rumpfhülle modulierbar ist. Diese Ausgestaltung unterstützt eine wirkungsvolle Enteisung der Rumpfhülle und damit einen sicheren Schlecht-Wetter-Betrieb des Luftfahrzeugs.

Bei einer weiteren besonders bevorzugten Ausbildungsform des erfindungsgemäßen Luftfahrzeugs ist eine zentrale, vorzugsweise digitale Regelung für die individuelle oder kollektive Ansteuerung der Anstellwinkel der Propellerblätter aller Antriebseinheiten zur vorzugsweise ausschließlichen Fluglageregelung und zur Flugsteuerung im vertikalen Startund Landebetrieb, im horizontalen Reiseflugbetrieb und im Übergangsbetrieb zwischen diesen beiden Betriebszuständen vorgesehen. Diese zentrale Regelung sorgt für ein unter allen Betriebszuständen des Luftfahrzeugs gewährleistetes stabiles Flugverhalten und entlastet somit die Piloten von dieser Aufgabe.

Als Redundanz zu dieser zentralen Regelung kann eine zusätzliche manuelle Flugsteuerung vorgesehen sein, die im Falle eines Ausfalls der zentralen Regelung den Piloten in die Lage versetzt, das Flugverhalten des Luftfahrzeugs zu stabilisieren.

Die Schubvektorsteuerung wird beim erfindungsgemäßen Luftfahrzeug durch die im Anspruch 1 angegebenen kennzeichnenden Merkmale geschaffen. Durch diese erfindungsgemäße Ausgestaltung wird unabhängig vom Kippzustand der Propellerrotationsebene zwischen der Auftriebsposition und der Vortriebsposition zusätzlich eine rundum wirksame Neigbarkeit der Propellerrotationsebene in Form einer gedachten Scheibe erzielt, die eine schnelle und sofort wirksame Änderung des Schubvektors ermöglicht. Diese besondere Ausgestaltung mit gegenüber der Abtriebswelle des Antriebs rundum neigbarer Propellerrotationsebene ist einsetzbar, wenn der Schubvektor schnell in seiner Wirkrichtung verändert werden soll.

Für die praktische Anwendung ergeben sich neben der im Vordergrund stehenden Anwendungseignung für die hochagile Schubvektorsteuerung von Propellerantrieben die folgenden Vorteile:
- Die Propellerebene kann unabhängig von der Fluglage jeweils senkrecht zur Anströmrichtung ausgerichtet werden.
- Bei Seitenwindanströmung kann eine kompensierende Trimmschubkomponente aufgebaut werden.
- Auch bei Schräganströmung der Propellerebene wirkt kein Biegemoment auf die Propellerwelle, da der Aufbau eines Kippmomentes der Propellerebene durch die zyklisch individuelle Blattanstellung ausgeschaltet wird.

Vorteilhaft ist dabei, wenn die Nabe des Propellers über einen Kardanring kardanisch gelagert ist, wodurch die die Schubvektorsteuerung ermöglichende Neigbarkeit der Propellerrotationsebene erzielt wird.

In einer bevorzugten Weiterbildung sind die Propellerblätter ohne Schlaggelenke und ohne Schwenkgelenke oder andere dazu äquivalent wirkende elastische Teile an einer zugeordneten Propellernabe angeordnet.

Dabei ist der Anstellwinkel der einzelnen Propellerblätter vorzugsweise mittels einer Taumelscheibe kollektiv sowie zur Neigung der Propellerrotationsebene individuell variabel verstellbar. Diese Anordnung der Propellerblätter und die Ansteuerung ihrer Anstellwinkel über eine Taumelscheibe bewirkt eine der Änderung des Anstellwinkels der Propellerblätter (Pitch-Änderung) unmittelbar folgende Neigung der Propellerrotationsebene, wodurch die gewünschte Schubvektoränderung zum Steuern des Luftfahrzeugs erzielt wird.

Die zyklische Änderung der Blattanstellwinkel erfolgt dabei wie beim Hubschrauber-Rotor über die Taumelscheibe. Im Unterschied zu diesem müssen jedoch die Blattwurzeln der Propellerblätter nach Abschluß des dynamischen Kippvorgangs der Propellerebene in eine Ebene, die senkrecht zur Anströmrichtung steht, nicht weiterhin zyklisch verstellt werden, da die Propellernabe - im Gegensatz zur hubschrauberfesten Rotornabe - gemeinsam mit der Propellerrotationsebene gegenüber der Abtriebswelle gekippt wurde. Die Taumelscheibe, die Propellernabe und die Propellerblätter rotieren bei dieser Ausführungsform des Erfindungsgegenstandes nach dem Kippvorgang wieder in zueinander parallelen Ebenen.

Grundsätzlich kann zwar der Neigungswinkel der Propellerrotationsebene bezüglich der die Propellerwelle beaufschlagenden Abtriebswelle des zugeordneten Antriebs zwischen ± 20° und ± 50°, vorzugsweise zwischen ± 25° und ± 35° und weiter bevorzugt ± 30° betragen, wie bereits ausgeführt worden ist. Beträgt der Neigungswinkel der Propellerrotationsebene bezüglich der die Propellerwelle beaufschlagenden Abtriebswelle des zugeordneten Antriebs jedoch um bis zu mehr als ± 45°, so kann bei geeigneter schräger Anbringung des Antriebs am Luftfahrzeug allein durch Neigen der Propellerrotationsebene sowohl eine Auftriebsstellung als auch eine Vortriebsstellung eingestellt werden.

Bevorzugt ist jedoch ein Kippmechanismus zur Halterung der Antriebseinheit am Luftfahrzeug vorgesehen, der ein Kippen der Antriebseinheit um eine Kippachse zwischen einer Auftriebsposition, in der die Abtriebswelle im wesentlichen vertikal ausgerichtet ist, und einer Vortriebsposition, in der die Abtriebswelle im wesentlichen horizontal ausgerichtet ist, gestattet. Dieses Kippen der Propellerrotationsebene aus der horizontalen Lage (Auftriebsposition) in die vertikale Lage (Vortriebsposition) und umgekehrt während der Transitionsphasen, das sind zum Beispiel beim Luftfahrzeug die jeweiligen Übergangsphasen zwischen Vertikalflug und Horizontalflug, wird ebenfalls durch die individuelle Anstellwinkelansteuerung der Propellerblätter über fluiddynamische Kräfte induziert und bewirkt das Kippen der Abtriebsachse des Antriebs um die Kippachse, beispielsweise eine Achse parallel zur Querachse des Luftfahrzeugs.

Vorzugsweise ist eine Nachführeinrichtung vorgesehen, welche einer sich aufgrund am Propeller angreifender fluiddynamischer Kräfte und daraus resultierender Kreiselkräfte ergebenden Kippbewegung der Antriebseinheit, insbesondere der Propellerrotationsebene, folgt und welche diese Kippbewegung vorzugsweise reaktionskraftfrei unterstützt. Die Nachführeinrichtung folgt dabei mit deutlich verlangsamter Stellgeschwindigkeit (ca. Faktor 5) der Kippbewegung der Propellerrotationsebene, die sich aufgrund der am Propeller angreifenden aerodynamischen Kräfte und aufgrund der daraus resultierenden Kreiselkräfte einstellt.

In einer alternativen Ausgestaltung ist die Propellernabe in einem einachsigen Neigungsgelenk gelagert, dessen Neigungsachse zur Kippachse der Antriebseinheit senkrecht verläuft, so daß die Neigbarkeit der Propellernabe um die Neigungsachse gemeinsam mit der Kippbarkeit der Antriebseinheit um die Kippachse der Antriebseinheic eine Neigung der Propellerrotationsebene in alle Richtungen gestattet, wobei die Stellgeschwindigkeit der Nachführeinrichtung für die Kippbewegung um die Kippachse der Antriebseinheit der Stellgeschwindigkeit der aerodynamisch induzierten Neigungsbewegung der Propellerrotationsebene im wesentlichen entspricht, um eine im wesentlichen reaktionskraftfreie Kippbewegung zu erzielen. Bei dieser Bauform kann die weiter oben angegebene kardanische Lagerung der Propellernabe entfallen.

In einer bevorzugten Weiterbildung ist in die Propellernabe ein bevorzugt in Planetengetriebebauweise ausgeführtes Untersetzungsgetriebe integriert, das von der Abtriebswelle des Antriebs, vorzugsweise über das Doppelkardangelenk oder das Gleichlaufgelenk, rotationsbeaufschlagt ist und das die Drehzahl der Abtriebswelle reduziert an die Propellernabe abgibt. Hierdurch wird das Doppelkardangelenk bzw. das Gleichlaufgelenk für den Propellerantrieb von sehr hohen Momenten entlastet, die insbesondere beim Betrieb mit einem Propeller großen Durchmessers auftreten können.

Diese Ausgestaltung des Antriebs sorgt aufgrund ihrer von der Variable-Pitch-Einstellung des Anstellwinkels der Rotorblätter verursachten Neigung der Propellerrotationsebene für eine reaktionskraftfreie Auslenkung der Propellerrotationsebene aus ihrer aktuellen Lage und damit für eine reaktionskraftfreie Veränderung des Schubvektors. Es müssen bei dieser Ausgestaltung folglich keine Kreiselmomente am Rumpf abgestützt werden, so daß aufwendige und schwere Stützkonstruktionen und entsprechende Verstärkungen im Rumpf auch dann entfallen können, wenn schnelle Schubvektoränderungen für eine agile Flugsteuerung und Fluglageregelung gefordert sind.

Weiterhin betrifft die Erfindung ein Verfahren zur Steuerung eines Luftfahrzeugs mit Propellerantrieb, wobei der Anstellwinkel der einzelnen Propellerblätter eines jeden Propellers individuell zyklisch eingestellt wird und wobei die Propellerrotationsebene durch die zyklisch individuelle Einstellung der einzelnen Propellerblätter eines jeden Propellers, induziert durch aerodynamische Kräfte und durch aus diesen resultierende Kreiselkräfte, reaktionskraftfrei geneigt wird. Dieses Verfahren ermöglicht das reaktionsschnelle Steuern eines Propeller-Luftfahrzeugs, das hierdurch insbesondere im Bereich niedriger Fluggeschwindigkeit schnellere Richtungsänderungen ermöglicht als mit der herkömmlichen aerodynamischen Steuerung über Höhenruder, Seitenruder und Querruder.

Die Erfindung wird nachfolgend anhand eines Beispiels unter Bezugnahme auf die Zeichnung näher erläutert; in dieser zeigt:
- **Fig. 1.**: ein erfindungsgemäßes Luftfahrzeug in einer Passagiertransportversion im Reiseflugzustand,
- **Fig. 2.**: eine isometrische, geschnittene Ansicht eines erfindungsgemäßen Luftfahrzeugs in einer Passagiertransportversion,
- **Fig. 3.**: ein erfindungsgemäßes Luftfahrzeug in einer Passagiertransportversion im Landezustand auf unpräpariertem Untergrund,
- **Fig. 4.**: ein erfindungsgemäßes Luftfahrzeug in einer Frachttransportversion im Landezustand auf unpräpariertem Untergrund,
- **Fig. 5.**: eine isometrische, geschnittene Ansicht eines erfindungsgemäßen Luftfahrzeugs in einer Frachttransportversion,
- **Fig. 6.**: eine geschnittene Draufsicht auf ein erfindungsgemäßes Luftfahrzeug in einer Frachttransportversion mit einem Antriebstragrahmen für die vorderen und die hinteren Antriebseinheiten,
- **Fig. 7.**: einen Ausschnitt einer teilweise geschnittenen Seitenansicht eines erfindungsgemäßen Luftfahrzeugs mit einem Versteifungsring und einer Stützstruktur,
- **Fig. 8.**: eine teilweise geschnittene Seitenansicht eines neigbaren Antriebs in einer ersten Ausführungsform,
- **Fig. 9.**: eine teilweise geschnittene Seitenansicht eines neigbaren Antriebs in einer zweiten Ausführungsform,

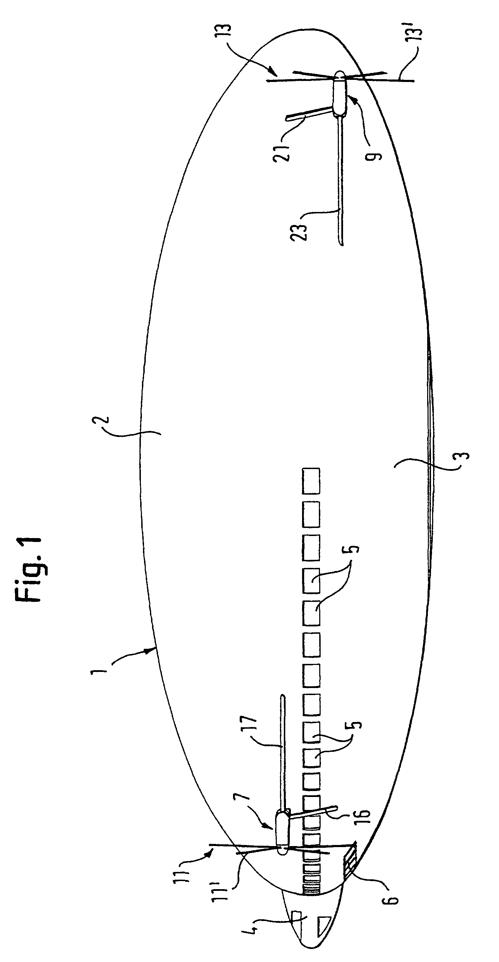

Fig. 1 zeigt eine Passagiertransportversion eines erfindungsgemäßen Luftfahrzeugs im Reiseflugzustand in einer Seitenansicht. Das Luftfahrzeug besitzt einen im wesentlichen als aerostatischen Auftriebskörper ausgebildeten Rumpf 1, der überwiegend mit einem Gas, das leichter ist als Luft, vorzugsweise Helium, gefüllt ist.

Der Rumpf 1 ist als Rotationsellipsoid gestaltet und besitzt somit einen im wesentlichen kreisförmigen Grundriß und einen elliptischen Querschnitt. Der bezüglich der Äquatorialebene des Rumpfes 1 obere Teil des Rumpfes 1, der als Oberschale 2 bezeichnet wird, ist stärker gewölbt als der unterhalb der Äquatorialebene gelegene und als Unterschale 3 bezeichnete untere Teil des Rumpfes 1, der wesentlich flacher ausgebildet ist und somit eine geringere Höhe aufweist als die Oberschale 2.

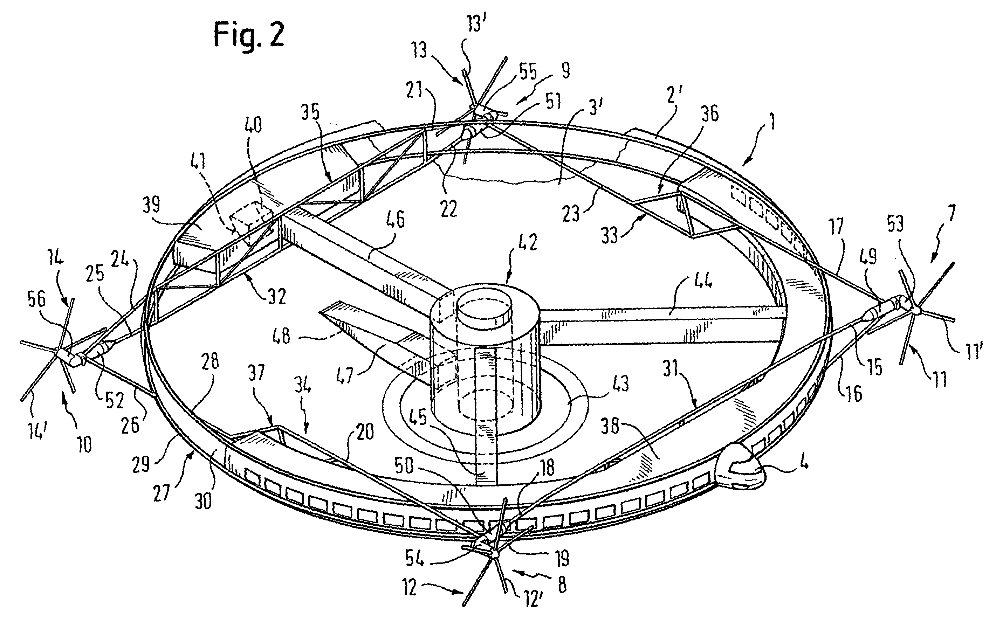

Obwohl der Rumpf 1 im Grundriß kreisförmig ausgebildet ist, besitzt er eine definierte Vorderseite, in Flugrichtung gesehen, die durch einen Cockpitansatz 4 bestimmt ist, der nasenartig an einem Ort des Äquatorialumfangs des Rumpfes 1 angebracht ist. Die vordere Hälfte des Äquatorialumfangs des Rumpfes 1 ist mit in der Rumpfwandung ausgebildeten Fenstern 5 des Obergeschosses einer zweigeschossigen Passagierkabine 38 (Fig. 2) versehen. Eine weitere Reihe als Panoramafenster 6 ausgebildeter Fenster des Untergeschosses ist im vordersten Bereich des Rumpfes 1 unterhalb des Cockpitansatzes 4 und seitlich davon angeordnet. Seitlich vom Rumpf 1 sind zwei vordere Antriebseinheiten 7, 8 sowie zwei hintere Antriebseinheiten 9, 10 angeordnet.

Die vorderen Antriebseinheiten 7, 8 sind jeweils mit einem in Flugrichtung nach vorne gerichteten Propeller 11, 12 versehen, der als Zugpropeller ausgebildet ist und dessen Propellerblätter 11', 12' wie Propellerblätter einer herkömmlichen Flugzeugluftschraube ausgebildet sind. Der Propellerdurchmesser liegt im Bereich des Durchmessers von Hubschrauberrotoren.

Die hinteren Antriebseinheiten 9, 10 besitzen einen bezüglich der Flugrichtung nach hinten weisenden Propeller 13, 14, der als Druckpropeller ausgebildet ist. Die Propellerblätter 13', 14' der hinteren Antriebseinheiten 9, 10 sind ebenfalls luftschraubenartig ausgebildet und der Durchmesser der hinteren Propeller 13, 14 entspricht in etwa dem Durchmesser der vorderen Propeller 11, 12.

Die vorderen Antriebseinheiten 7, 8 sind über jeweilige Querlenker 15, 16 bzw. 18, 19 sowie Längslenker 17 bzw. 20 am Rumpf angebracht.

Die hinteren Antriebseinheiten 9, 10 sind über jeweilige Querlenker 21, 22 bzw. 24, 25 sowie jeweilige Längslenker 23 bzw. 26 am Rumpf angebracht.

Die vorderen Antriebseinheiten 7, 8 sind oberhalb der Äquatorialebene gelegen und die hinteren Antriebseinheiten 9, 10 sind unterhalb der Äquatorialebene des Rumpfes 1 gelegen.

Fig. 2 ist eine isometrische, geschnittene Ansicht eines erfindungsgemäßen Luftfahrzeugs in einer Passagiertransportversion, wobei die Rumpfhülle 2' der Oberschale 2 größtenteils weggeschnitten ist und die Rumpfhülle 3' der Unterschale 3 im Bereich der hinteren linken Antriebseinheit 9 weggeschnitten ist.

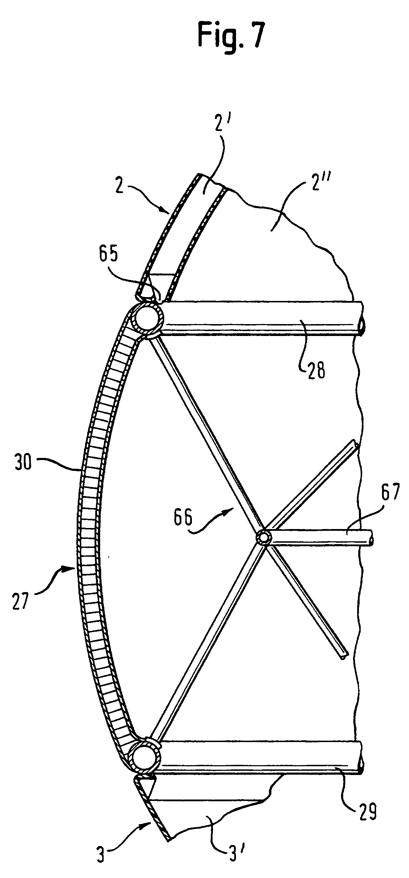

Im Äquatorialbereich des Rumpfes 1 ist ein felgenartiger Versteifungsring 27 vorgesehen, der an seinem oberen Rand und an seinem unteren Rand jeweils ein umlaufendes, druckfestes Stützprofil 28, 29 aufweist. Zwischen den umlaufenden Stützprofilen 28, 29 ist eine ringförmige Wandung 30 vorgesehen, die das obere Stützprofil 28 und das untere Stützprofil 29 miteinander verbindet. Der Aufbau des Versteifungsrings 27 wird weiter unten anhand der Fig. 7 detailliert beschrieben.

Die vorderen Antriebseinheiten 7, 8 sind über eine fachwerkartige vordere Stützstruktur 31 miteinander verbunden, wobei die vorderen oberen Querlenker 15, 18 und die vorderen unteren Querlenker 16, 19 Elemente der vorderen Stützstruktur 31 bilden.

Die hinteren Antriebseinheiten 9, 10 sind über eine hintere Stützstruktur 32 miteinander verbunden, wobei die hinteren Querlenker 21, 22, 24, 25 Elemente der hinteren Stützstruktur 32 bilden.

Die vorderen Längslenker 17, 20 einer jeden Seite sind mit den hinteren Längslenkern 23, 26 derselben Seite des Luftfahrzeugs verbunden, wobei im Bereich der jeweiligen Verbindungsstelle eine fachwerkartige Struktur 33, 34 vorgesehen ist, um die unterschiedlichen Höhenlagen der Triebwerke und damit von deren Längslenkern auszugleichen.

Die Längslenker 17, 23 bzw. 20, 26 mit ihren zugehörigen fachwerkartigen Verbindungsstrukturen 33 bzw. 34 bilden jeweils eine linke Schubstrebe 36 bzw. eine rechte Schubstrebe 37.

Die vordere Stützstruktur 31, die hintere Stützstruktur 32, der linke vordere Längslenker 17, der linke hintere Längslenker 23, deren linke fachwerkartige Verbindungsstruktur 33, der rechte vordere Längslenker 20 der rechte hintere Längslenker 26 und deren rechte fachwerkartige Verbindungsstruktur 34 bilden gemeinsam einen Antriebstragrahmen 35, der die vier Antriebseinheiten 7, 8, 9 und 10 miteinander verbindet, wobei die jeweiligen Längslenker 17, 23, 20, 26 mit den zugeordneten Stützstrukturen 31, 32 unstarr verbunden sind, um eine Verwindbarkeit und Verschränkbarkeit des Antriebstragrahmens 35 zuzulassen.

Der Antriebstragrahmen 35 ist am felgenartigen Versteifungsring 27 im Bereich der vorderen und der hinteren Stützstruktur 31, 32 sowie der linken und der rechten Schubstrebe 36, 37 unstarr aufgehängt, um auch hier eine Verwindbarkeit zwischen dem Antriebstragrahmen 35 und dem felgenartigen Versteifungsring 27 zuzulassen.

Im vorderen Teil des Rumpfes 1 ist eine halbringförmige Passagierkabine 38 vorgesehen, die am felgenartigen Versteifungsring 27 und am Antriebstragrahmen 35, insbesondere an dessen vorderer Stützstruktur 31, aufgehängt ist. Die Fenster 5 der Passagierkabine 38 sind im vorderen Teil des Versteifungsrings 27 in dessen ringförmiger Wandung ausgebildet.

Im hinteren Teil des Rumpfes 1 ist ein Gepäck- und Frachtraum 39 für Fracht und Reisegepäck der Passagiere vorgesehen. Der Gepäck- und Frachtraum 39 ist am Versteifungsring 27 und an der hinteren Stützstruktur 32 aufgehängt. An seiner Unterseite ist der Gepäck- und Frachtraum 39 mit einem Schacht 40 versehen, der vom Boden des Gepäck- und Frachtraums 39 zur Wandung der Unterschale 3 führt. Der Schacht 40 ist an seiner Unterseite von einer in der Wandung der Unterschale 3 angebrachten Klappe 41 verschließbar. Ein in der Fig. 2 nicht dargestellter Seilzug oder Lift ist im Gepäck- und Frachtraum 39 im Bereich des Schachts 40 vorgesehen, um Fracht vom Gepäck- und Frachtraum 39 zur Oberfläche eines Landeplatzes herabzulassen bzw. Fracht von dort in das Luftfahrzeug zu transportieren.

In der Mitte des Rumpfes ist ein zylindrischer Zentralkörper 42 vorgesehen, der auf einem an der Unterseite der Unterschale 3 ausgebildeten Landefuß 43 steht und der über ummantelte Transportstege 44, 45, 46 mit der Passagierkabine 38 sowie mit dem Gepäck- und Frachtraum 39 verbunden ist. Der Zentralkörper 42 reicht zumindest bis in den Bereich der Äquatorialebene oder geringfügig darüber hinaus, wobei jedoch ein deutlicher Vertikalabstand zwischen der Oberseite des Zentralkörpers 42 und der Wandung der Oberschale 2 vorgesehen ist. Der Zentralkörper 42 ist in der von der Oberschale 2, der Unterschale 3 und dem Versteifungsring 27 gebildeten Hüllenstruktur des Rumpfes 1 so aufgehängt, daß er bei einer harten Landung des Luftfahrzeugs nach oben einfedern kann und so ein Durchfedern von Passagierkabine 38, Gepäck- und Frachtraum 39 und Antriebstragrahmen 35 gestattet, wobei auch die Transportstege 44, 45, 46 mit dem Zentralkörper 42 unstarr verbunden sind, um dessen Einfedern zu ermöglichen.

Im unteren Bereich der Unterschale 3 ist eine vom Zentralkörper 42 radial nach außen zur Wandung bzw. Hülle 3' der Unterschale 3 führender ummantelter Korridor 47 vorgesehen, der von einer in der Wandung der Unterschale 3 ausgebildeten Zugangsrampe 48 verschließbar ist. Innerhalb des Zentralkörpers 42 sind Treppen und/oder Aufzüge vorgesehen, die den unteren Einstiegsbereich des Zentralkörpers 42 in Höhe des Korridors 47 mit dem oberen Zugangsbereich zu den Transportstegen 44, 45, 46 verbinden.

Weiterhin ist in Fig. 2 zu erkennen, daß die Antriebseinheiten 7, 8, 9, 10 abgewinkelt ausgebildet sind, wobei jeweils eine Antriebsmaschine 49, 50, 51, 52 quer zur durch den Zentralkörper und den Cockpitansatz verlaufenden Längsmittelebene des Luftfahrzeugs angeordnet ist und vorzugsweise horizontal liegt. Die vorderen Antriebsmaschinen 49, 50 sind dabei koaxial zum jeweiligen vorderen oberen Querlenker 15 bzw. 18 ausgerichtet, während die hinteren Antriebsmaschinen 51, 52 koaxial mit dem jeweils zugeordneten hinteren unteren Querlenker 22 bzw. 25 ausgerichtet sind. Die Achsen der Antriebsmaschinen 49, 50, 51, 52 liegen somit in einer Ebene parallel zur Äquatorialebene des Luftfahrzeugs.

Jede der Antriebsmaschinen 49, 50, 51, 52 ist über ein in den Figuren nicht dargestelltes Winkelgetriebe, dessen jeweilige Eingangswelle mit der Ausgangswelle der zugeordneten Antriebsmaschine verbunden ist und dessen den jeweiligen Propeller beaufschlagende Abtriebswelle in einer rechtwinklig zur Rotationsachse des jeweiligen Antriebs verlaufenden Ebene gelegen ist. In der Darstellung in Fig. 2 liegen die Abtriebswellen zudem in der Waagerechten. Das Vorhandensein der Winkelgetriebe in jeder Antriebseinheit 7, 8, 9, 10 ist durch die in Fig. 2 dargestellte abgewinkelte Gestalt der Antriebseinheiten 7, 8, 9, 10 zu erkennen.

Jede Antriebseinheit 7, 8, 9, 10 ist um die Rotationsachse ihrer zugeordneten Antriebsmaschine 49, 50, 51, 52 derart drehbar gelagert, daß der jeweilige in Fig. 2 waagerecht liegende vordere Abschnitt 53, 54 der vorderen Antriebseinheiten 7, 8 bzw. der in Fig. 2 waagerecht liegende hintere Abschnitt 55, 56 der jeweiligen hinteren Antriebseinheit 9, 10, in dem jeweils die zugeordnete Abtriebswelle des Antriebs liegt, zwischen der in Fig. 2 dargestellten waagerechten Ausrichtung und einer senkrechten Ausrichtung kippbar ist.

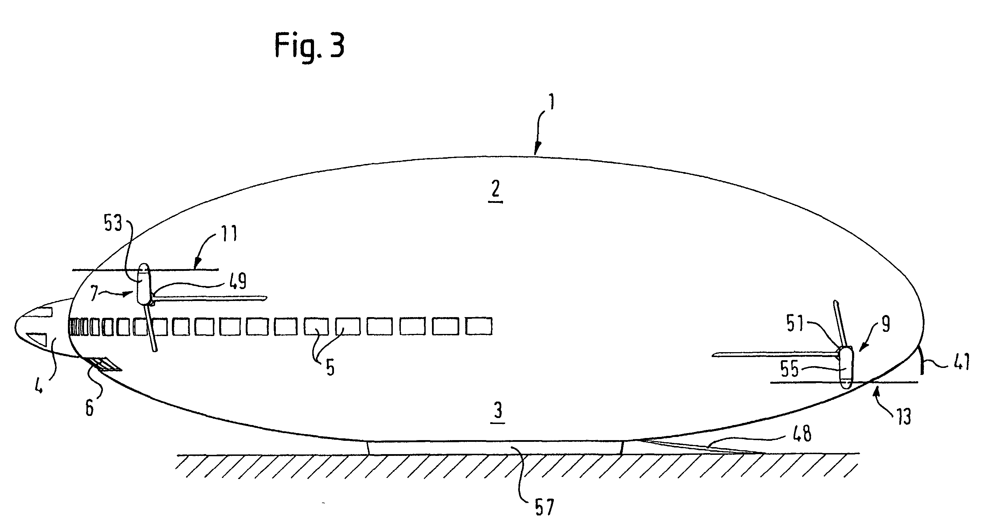

In Fig. 3 ist das Luftfahrzeug in einer Seitenansicht im gelandeten Zustand dargestellt, in dem die Abschnitte 53, 54, 55, 56 der Antriebseinheiten 7, 8, 9, 10, in denen die jeweilige Abtriebswelle gelegen ist, in die Vertikale gekippt ist. Die jeweilige Propellerrotationsebene der Antriebseinheiten 7, 8, 9, 10 verläuft daher in Fig. 3 waagerecht, weshalb Fig. 3 auch gleichzeitig die Start- und Landeposition der Antriebseinheiten zeigt.

In Fig. 3 sind weiterhin die geöffnete Klappe 41 des Gepäckund Frachtraums 39 sowie die herabgelassene Zugangsrampe 48 des Korridors 47 zum Zentralkörper 42 zu erkennen. Unterhalb der Unterschale 3 des Rumpfes 1 ist ein balgartiger Ringwulst 57 zu sehen, der von der unteren Wandung der Unterschale 3 nach unten ausgefahren ist und auf dem das gelandete Luftfahrzeug ruht, wobei der Ringwulst 57 als Landefuß dient.

In Fig. 3 ist außerdem erkennbar, daß die vordere Antriebseinheit 7 und auch die nicht dargestellte vordere Antriebseinheit 8 gegenüber der in Fig. 1 dargestellten Position im Reiseflug nach oben gekippt ist, so daß sich die Ebene des Propellers 11 oberhalb der zugeordneten Antriebsmaschine 49 befindet und daß sich die Ebene des Propellers 13 der hinteren Antriebseinheit 9 - ebenso wie der nicht zu erkennenden hinteren Antriebseinheit 10 - unterhalb der zugeordneten Antriebsmaschine 51 liegt. Diese unterschiedliche Lage der jeweiligen Propellerebene ist dadurch bedingt, daß es sich bei den vorderen Propellern um Zugpropeller und bei den hinteren Propellern um Druckpropeller handelt, so daß mit der in Fig. 3 gezeigten Anordnung sowohl die vorderen Antriebseinheiten als auch die hinteren Antriebseinheiten eine nach oben gerichtete Schubkraft erzeugen können.

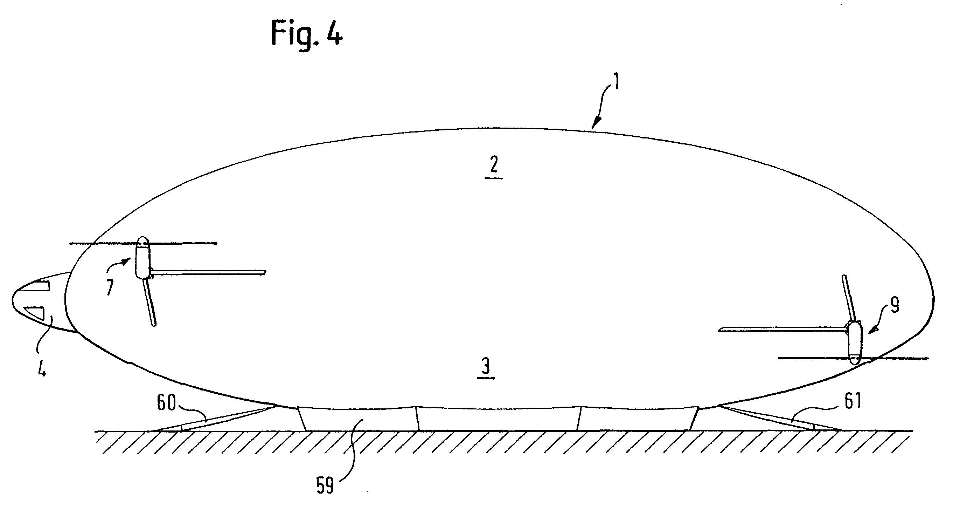

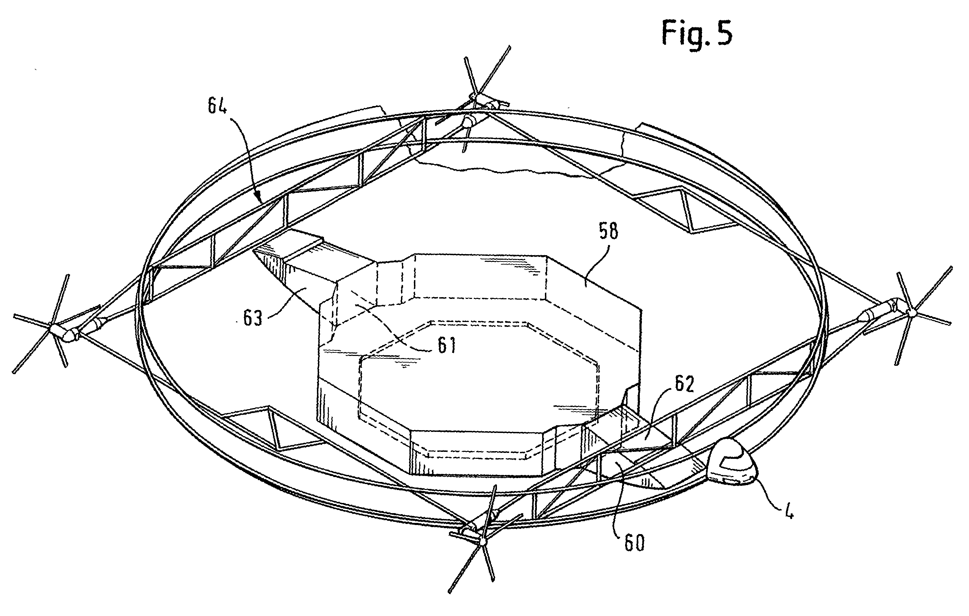

Fig. 4 zeigt eine Ausführungsform des erfindungsgemäßen Luftfahrzeugs, das als Frachttransportversion ausgebildet ist, im gleichen Betriebszustand wie die Fig. 3 für die Passagiertransportversion. Bei dieser Frachttransportversion fehlen die bei der Passagiertransportversion vorgesehenen Fenster 5 und 6 im Rumpf 1. In der Unterschale 3 ist dafür ein in Fig. 5 dargestellter, im Grundriß im wesentlichen achteckiger Frachtraum 58 (Fig. 5) ausgebildet, der unterhalb seines Bodens mit einem dem Grundriß angepaßten nach unten gerichteten balgartigen Ringwulst 59 versehen ist, der die gleiche Funktion als Landefuß besitzt wie der Ringwulst 57 bei der Passagiertransportversion, der jedoch eine dem Grundriß des Frachtraums angepaßte größere Grundfläche umgrenzt als der Ringwulst 57 der Passagiertransportversion.

Weiterhin sind bei der in Fig. 4 gezeigten Frachttransportversion eine vordere Rampe 60 und eine hintere Rampe 61 in der Wandung der Unterschale 3 vorgesehen, die von vorne bzw. von hinten durch einen vorderen Korridor 62 bzw. einen hinteren Korridor 63 zum Frachtraum 58 führen (Fig. 5) und die das gleichzeitige Beladen und Entladen des Frachtraums 58 erleichtern.

Fig. 5 gibt eine isometrische Ansicht der teilweise geschnittenen Frachttransportversion des erfindungsgemäßen Luftfahrzeugs wieder, wobei die Ansicht der Fig. 5 prinzipiell der Ansicht der Passagiertransportversion aus Fig. 2 entspricht. Auch der Aufbau des Antriebstragrahmens 64 entspricht bei dieser Version grundsätzlich dem Antriebstragrahmen 35 der Passagiertransportversion. Auch der Rumpf 1 mit der Oberschale 2 und der Unterschale 3 sowie dem felgenartigen Versteifungsring 27 entspricht grundsätzlich der Version der in Fig. 2 dargestellten Passagiertransportversion. Zur Vermeidung von Wiederholungen wird daher bezüglich der Beschreibung dieser im wesentlichen baugleich ausgebildeten Strukturelemente sowie der im wesentlichen baugleich ausgebildeten Antriebseinheiten auf die Beschreibung der Fig. 2 verwiesen. Der Frachtraum 58 befindet sich im wesentlichen im Bereich der Unterschale 3 des Rumpfes 1 und die obere Wandung des Frachtraums 58 ist von der oberen Wandung der Oberschale 2 deutlich beabstandet, um auch hier ein Einfedern des Frachtraums 58 zu ermöglichen und somit ein Durchfedern des Antriebstragrahmens 64 zu gestatten. Die Höhe des Frachtraums 58 beträgt maximal etwa ein Viertel der Gesamthöhe des Luftfahrzeugs.

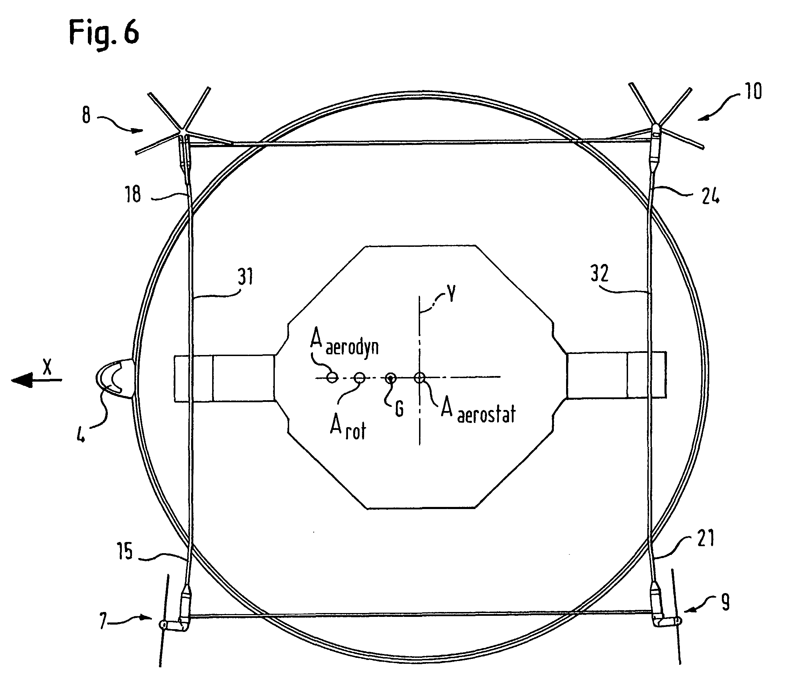

In Fig. 6 ist die Frachttransportversion aus den Fig. 4 und 5 nochmals in einer geschnittenen Grundrißansicht dargestellt, wobei auf der in Flugrichtung X gesehen rechten Seite die vordere rechte Antriebseinheit 8 und die hintere rechte Antriebseinheit 10 in ihrer Vertikalflugposition (mit waagerechter Propellerebene) gezeigt sind und wobei die in Flugrichtung gesehen linken Antriebseinheiten, die linke vordere Antriebseinheit 7 und die linke hintere Antriebseinheit 9, in Reiseflugstellung (mit vertikaler Propellerebene) dargestellt sind. Diese Darstellung mit unterschiedlich gekippten Antriebseinheiten dient lediglich dem besseren Verständnis; sie stellt keinen realen Flugzustand dar.

Die Anordnung der Antriebseinheiten ist bezüglich der Auftriebsverteilung in Längsrichtung vorteilhafterweise so vorgenommen, daß beim vertikalen Start die Resultierende aus dem Auftriebsschwerpunkt aller Antriebseinheiten Aᵣₒₜ und aus dem aerostatischen Auftrieb des Rumpfvolumens Aₐₑᵣₒₛₜₐₜ durch den Massenschwerpunkt G des Luftfahrzeugs geht. Die Massenverteilung und die Verteilung des aerostatischen Auftiebs Aₐₑᵣₒₛₜₐₜ sind dabei vorteilhafterweise so eingerichtet, daß der Massenschwerpunkt G so weit vor dem aerostatischen Auftriebszentrum liegt, daß sich nach dem Ausfall sämtlicher Antriebseinheiten, z. B. wegen Kraftstoffmangels, ein flugmechanisch stabiler Gleitflug bei einer vorgewählten geringen Fluggeschwindigkeit einstellt. In Fig. 6 geben dementsprechend beispielhaft die Punkte mit der jeweiligen Bezeichnung A_{aerodyn} den Angriffspunkt eines resultierenden aerodynamischen Auftriebs, Aₐₑᵣₒₛₜₐₜ den Angriffspunkt des aerostatischen Auftriebs des Rumpfvolumens, Aᵣₒₜ den Auftriebsschwerpunkt aller Antriebseinheiten und G den Massenschwerpunkt des Luftfahrzeugs an.

Deutlich erkennbar ist in der Darstellung der Fig. 6, daß die jeweiligen Querlenker 15, 16; 18, 19; 21, 22; 24, 25, von denen jeweils nur der obere Querlenker zu sehen ist, gegenüber der Luftfahrzeugquerachse y, vom innerhalb des Rumpfes gelegenen Mittelabschnitt der vorderen Stützstruktur 31 bzw. dem innerhalb des Rumpfes gelegenen Mittelabschnitt der hinteren Stützstruktur 32 ausgehend geringfügig nach außen gerichtet, also von der vorderen Stützstruktur 31 nach vorne und von der hinteren Stützstruktur 32 nach hinten, abgewinkelt ausgebildet sind. Die hierdurch erhaltene Schrägstellung der Propellerebenen im Reiseflug bezüglich einer Vertikalebene durch die Querachse des Luftfahrzeugs ist auch in der Seitenansicht der Fig. 1 zu erkennen. Diese Schrägstellung bewirkt, daß der Propeller in seiner Normalstellung im Reiseflugzustand (Fig. 1) von der das Luftfahrzeug umströmenden Luftströmung im wesentlichen axial angeströmt wird.

Fig. 7 zeigt einen Ausschnitt einer teilweise geschnittenen Seitenansicht eines erfindungsgemäßen Luftfahrzeugs im Äquatorialbereich. Der Versteifungsring 27 weist ein rohrförmiges oberes Stützprofil 28 sowie ein rohrförmiges unteres Stützprofil 29 auf, die in eine sandwichartig aufgebaute ringförmige Wandung 30 an deren oberem Umfang bzw. an deren unterem Umfang einlaminiert sind. Die Wandung 30 ist in ihrer Kontur teilelliptisch konvex nach außen gewölbt. Die Rumpfhülle 2' der Oberschale 2 sowie die Rumpfhülle 3' der Unterschale 3 sind über geeignete Befestigungsvorrichtungen am oberen Stützprofil 28 bzw. am unteren Stützprofil 29 befestigt. Hierzu kann das jeweilige Stützprofil 28, 29 eine geeignete profilierte Querschnittsform abweichend von der in Fig. 7 dargestellten Kreisform aufweisen, die ein Anbringen entsprechender Befestigungsteile der jeweiligen Rumpfhülle 2', 3' am zugeordneten oberen Stützprofil 28 bzw. am unteren Stützprofil 29 ermöglicht.

Die Rumpfhülle wird von einem geeigneten flexiblen Material gebildet, wie dies beispielsweise bereits im Luftschiffbau Verwendung findet. Die in der vorliegenden Anmeldung gewählten Bezeichnungen Oberschale und Unterschale bedeuten nicht, daß es sich hierbei um starre Gebilde handelt, sondern bezeichnet nur die geometrische Gestalt im unter Druck gesetzten Zustand des Rumpfes.

Die Oberschale 2 ist doppelwandig ausgebildet, wobei eine innere Hülle 2" von der äußeren Hülle 2' beabstandet ist und einen Kanal bildet, in den im oberen Stützprofil 28 ausgebildete Ausströmöffnungen 65 einmünden. Der zwischen der äußeren Hülle 2' und der inneren Hülle 2" gebildete Raum kann auch meridianartig in eine Vielzahl von Kanälen unterteilt sein. Am obersten Punkt der Oberschale 2 ist in der äußeren Hülle 2' eine nicht gezeigte zentrale obere Ausströmöffnung vorgesehen. Auf diese Weise kann durch das obere Stützprofil 28 zugeführte Warmluft aus den Öffnungen 65 in die zwischen der inneren Hülle 2" und der äußeren Hülle 2' gebildeten Kanäle einströmen und aus der zentralen oberen Ausströmöffnung wieder entweichen, wobei die Warmluft die äußere Hülle 2' erwärmt und damit ein Enteisen der äußeren Hülle ermöglicht.

In Fig. 7 ist weiterhin ein fachwerkartiges Stützgerüst 66 gezeigt, das auf der radial inneren Seite des Versteifungsrings 27 gelegen ist und das das obere Stützprofil 28 und das untere Stützprofil 29 unter Einbeziehung eines inneren ringförmigen Stützprofils 67 verbindet. Das Stützgerüst 66 dient zur Verstärkung des Versteifungsrings 27.

Zur Steuerung weist das ohne herkömmliche aerodynamische Steuervorrichtungen ausgebildete Luftfahrzeug spezielle Antriebseinheiten 7, 8, 9, 10 auf, die aufgrund eines besonders gestalteten Rotorkopfes 110 mit neigbarer Propellerrotationsebene 113 eine Schubvektorsteuerung mittels des Propellers ermöglichen.

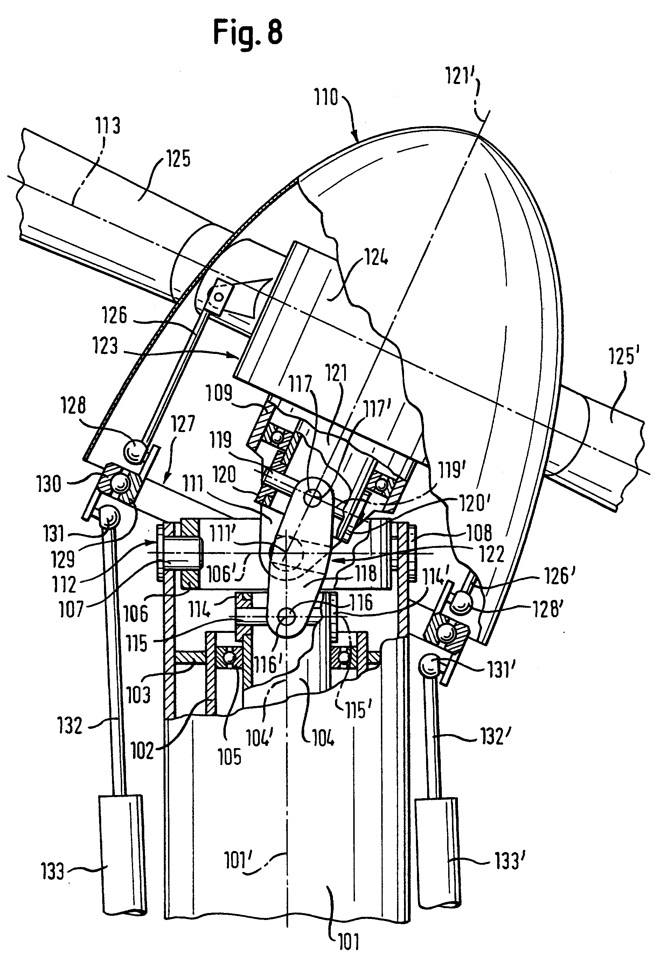

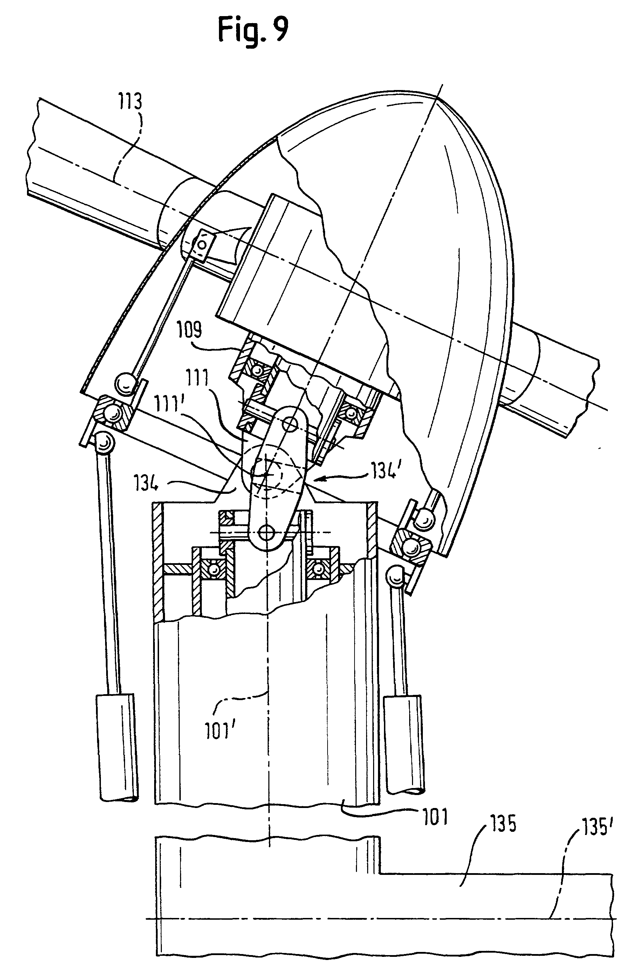

Ein Rotorkopf 110 einer derartigen Antriebseinheit sowie eine Abwandlung davon werden nachfolgend unter Bezugnahme auf die Fig. 8 und 9 beschrieben.

In Fig. 8 ist eine erste Ausführungsform eines erfindungsgemäßen Rotorkopfes einer der Antriebseinheiten 7, 8, 9, 10 dargestellt. Der Rotorkopf weist in seinem in Fig. 8 unteren Teil einen hohlzylindrisch ausgebildeten vorderen Abschnitt 101 eines Propellerträgers oder Antriebsgehäuses auf, der den vorderen Abschnitten 53, 54 der vorderen Antriebseinheiten 7, 8 bzw. den hinteren Abschnitten 55, 56 der hinteren Antriebseinheiten 9, 10 des erfindungsgemäßen Luftfahrzeugs entspricht.

Im Inneren des vorderen Abschnitts 101 ist koaxial dazu ein inneres zylindrisches Hilfstragrohr 102 angeordnet, das über ringförmige Abstandhalter 103 mit dem zylindrischen vorderen Abschnitt 101 verbunden ist.

Innerhalb des inneren zylindrischen Hilfstragrohrs 102 ist koaxial zu diesem eine Welle 104 über Lager 105 drehbar gelagert. Die Welle 104 ist die Abtriebswelle einer der in Fig. 2 schematisch dargestellten Antriebsmaschinen 49, 50, 51, 52. Sie kann koaxial zur Rotationswelle der zugeordneten Antriebsmaschine angeordnet sein oder wie im Beispiel der Figuren 1 bis 7 über ein Winkelgetriebe mit der Rotationswelle der Antriebsmaschine verbunden sein. Außerdem kann die Welle 104 die Abtriebswelle eines der Antriebsmaschine nachgeordneten Untersetzungs- oder Sammelgetriebes sein.

Am freien Ende des zylindrischen vorderen Abschnitts 101 des Propellerträgers oder Antriebsgehäuses ist ein Kardanring 106 innerhalb des hohlzylindrischen Mantels des vorderen Abschnitts 101 an diesem schwenkbar gelagert. Die Schwenkachse 106' des Kardanrings 106 steht dabei im rechten Winkel zur Längsachse 101' des zylindrischen vorderen Abschnitts 101. Die Lagerung des Kardanrings 106 am hohlzylindrischen vorderen Abschnitt 101 erfolgt in bekannter Weise über Lagerbolzen 107, 108.

Innerhalb des Kardanrings 106 ist ein zylindrisches Tragrohr 109 der Propellernabe 110 mittels zweier an zwei radial gegenübergelegenen Seiten am unteren Ende des hohlzylindrischen Tragrohrs 109 axial hervorstehenden Lagerlaschen 111 im Kardanring 106 schwenkbar gelagert. Die Neigungsachse 111', um die die Lagerlaschen 111 und damit das hohlzylindrische Tragrohr 109 schwenken, ist senkrecht zur Längsachse 109' des hohlzylindrischen Tragrohrs 109 und senkrecht zur Schwenkachse 106' des Kardanrings 106 gelegen. Auf diese Weise ist ein äußeres Kardangelenk 112 gebildet, dessen Mittelpunkt durch den Schnittpunkt der Achsen 101', 106' und 111' gebildet ist und das eine Neigbarkeit der Propellerebene 113 bezüglich der Längsachse 101' des vorderen Abschnitts 101 des Propellerträgers oder Antriebsgehäuses, die gleichzeitig die Rotationsachse 104' der Abtriebswelle 104 bildet, in beliebige Richtungen gestattet.

Im Bereich des freien Endes der Abtriebswelle 104 sind zwei diametral gegenübergelegene untere innere Schwenklager 114, 114' vorgesehen, in denen eine die Abtriebswelle 104 diametral durchdringende Achse 115 gelagert ist, deren Schwenkachse 115' im rechten Winkel zur Rotationsachse 104' der Abtriebswelle 104 liegt, welche ihrerseits koaxial zur Längsachse 101' des vorderen Abschnitts 101 verläuft. Die Achse 115 ist zur Ausbildung eines unteren Kardankreuzes in ihrer Mitte (in Längsrichtung gesehen) mit zwei seitlich angebrachten Schwenkzapfen 116 versehen, deren Schwenkachse 116' im rechten Winkel zur Schwenkachse 115' liegt.

An den Schwenkzapfen 116 ist jeweils eine sich vom freien Ende der hohl ausgebildeten Antriebswelle 104 wegerstreckende Verbindungswelle 118 schwenkbar gelagert, die an ihrem von den Schwenkzapfen 116 abgewandten Ende auf Schwenkzapfen 117 gelagert ist, deren Schwenkachse 117' parallel zur Schwenkachse 116' verläuft. Die Schwenkzapfen 117 sind zur Ausbildung eines oberen Kardankreuzes in der Mitte (in Längsrichtung gesehen) einer Achse 119 seitlich an dieser angebracht, deren Schwenkachse 119' rechtwinklig zur Schwenkachse 117' verläuft.

Die Achse 119 ist in zwei oberen inneren Schwenklagern 120, 120' schwenkbar gelagert, die im Bereich des freien Endes einer Propellerwelle 121, diese diametral durchdringend, vorgesehen sind. Die Rotationsachse 121' der Propellerwelle 121 steht senkrecht auf der Propellerrotationsebene 113 sowie auf der Schwenkachse 119'.

Auf diese Weise ist ein inneres Doppelkardangelenk 122 gebildet, dessen Gelenkkreuze äquidistant zum Mittelpunkt des äußeren Kardangelenks 112 positioniert sind. Hierdurch wird erreicht, daß bei Neigung der Propellerrotationsebene 113 die Winkel zwischen den Rotationsachsen der Abtriebswelle 104 und der Verbindungswelle 118 sowie zwischen den Rotationsachsen der Verbindungswelle 118 und der Propellerwelle 121 jeweils gleich groß sind und der Hälfte des Neigungswinkels der Propellerrotationswelle 113 entsprechen. Von dem so eingebauten Doppelkardangelenk wird die Rotation der Abtriebswelle 104 auf die Propellerwelle 121 in jeder beliebigen Neigungsposition der Propellerrotationsebene 113 gleichförmig übertragen.

Die Rotationsachse 121' der Propellerwelle 121 und die Rotationsachse 104' der Abtriebswelle 104 schneiden sich in der Mitte des äußeren Kardangelenks 112, das heißt im Schnittpunkt der Schwenkachse 106' des Kardanrings 106 und der Neigungsachse 111' der Lagerlaschen 111.

In der Propellernabe 110 ist ein Planetengetriebe 123 vorgesehen, dessen Sonnenrad mit der Propellerwelle 121 verbunden ist und an dessen Hohlrad 124 die Propellerblätter 125 gelagert sind. Die Planetenräder des Planetengetriebes 123 sind an einem mit dem zylindrischen Tragrohr 109 drehfest verbundenen Planetenradträger gelagert.

Die Lagerung der Propellerblätter 125, 125' am Hohlrad 124 ist derart ausgebildet, daß die Anstellwinkel der Propellerblätter 125, 125' verstellbar sind. Hierzu ist jedes Propellerblatt 125, 125' über eine zugeordnete obere Stellstange 126, 126' mit einer Taumelscheibe 127 mittels eines jeweiligen oberen Kugelgelenks 128, 128' gelenkig verbunden. Die Taumelscheibe 127 besteht aus einem inneren Lagerring 129 und einem äußeren Lagerring 130, wobei die oberen Kugelgelenke 128, 128' am inneren Lagerring 129 angeordnet sind. Die Ebene der ringförmigen Taumelscheibe 127 verläuft durch den Mittelpunkt des äußeren Kardangelenks 112, sie kann aber auch zur Propellernabe hin versetzt sein.

Am äußeren Lagerring 130 der Taumelscheibe 127 sind untere Kugelgelenke 131, 131' vorgesehen, an denen untere Stellstangen 132, 132' gelagert sind, die entlang dem vorderen Abschnitt 101 des Propellerträgers oder Antriebsgehäuses verlaufen und die über zugeordnete Kolben-Zylinder-Einheiten 133, 133' axial verstellbar sind. Die Kolben-Zylinder-Einheiten 133, 133' sind außerhalb des vorderen Abschnitts 101 angeordnet, sie können aber auch innerhalb des rohrförmigen vorderen Abschnitts 101 zwischen diesem und dem inneren zylindrischen Hilfstragrohr 102 angeordnet sein.

Mittels der Kolben-Zylinder-Einheiten 133, 133', der unteren Stellstangen 132, 132', der Taumelscheibe 127, und der oberen Stellstangen 126, 126' kann nicht nur der Anstellwinkel eines jeden Propellerblatts 125, 125' individuell verstellt werden, sondern es kann über diese Verstellmechanik ebenso eine kollektive Verstellung der Anstellwinkel der Propellerblätter um eine allen Propellerblättern gemeinsame Anstellwinkeldifferenz erfolgen.

Fig. 9 zeigt eine Abwandlung des Rotorkopfes aus Figur 8, bei dem das äußere Kardangelenk 112 durch ein einfaches um eine Achse schwenkbares Gelenk ersetzt worden ist, wie nachfolgend anhand der Unterschiede zum Rotorkopf der Figur 8 erläutert wird.

Am in Figur 9 oberen freien Ende des vorderen Abschnitts 101 des Propellerträgers oder Antriebsgehäuses sind untere Lagerlaschen 134 vorgesehen, die von der Stirnseite des freien Endes des zylindrischen vorderen Abschnitts 101 in Längsrichtung des vorderen Abschnitts 101 hervorstehen und an zwei diagonal gegenübergelegenen Seiten des vorderen Abschnitts 101 angeordnet sind. An den unteren Lagerlaschen 134 sind die Lagerlaschen 111 des zylindrischen Tragrohrs 109 der Propellernabe schwenkbar gelagert, wobei die Neigungsachse 111' senkrecht zur Längsachse 101' des vorderen Abschnitts 101 steht. Auf diese Weise ist ein Neigungsgelenk 134' gebildet. Die Achsen 101' und 111' verlaufen zudem jeweils rechtwinklig zu einer Kippachse 135' einer Befestigungsanordnung 135 für die Befestigung der Antriebseinrichtung am Luftfahrzeug.

Bei diesem Rotorkopf kann die Propellerrotationsebene 113 ebenfalls in jede beliebige Richtung geneigt werden, da die Kippachse 135' den Freiheitsgrad liefert, der bei der Ausführung nach Figur 8 von der Schwenkachse 106' des Kardanrings 106 geliefert wird.

Auch bei der in Figur 8 gezeigten Ausführungsform mit dem äußeren Kardangelenk 112 kann die um die Kippachse 135' kippbare Befestigungseinrichtung 135 vorgesehen sein.

Die Erfindung ist nicht auf das obige Ausführungsbeispiel, das lediglich der allgemeinen Erläuterung des Kerngedankens der Erfindung dient, beschränkt. Im Rahmen des Schutzumfangs kann die erfindungsgemäße Vorrichtung vielmehr auch andere als die oben beschriebenden Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Rumpf
- 2: Oberschale
- 2': Äußere Hülle
- 2": Innere Hülle
- 3: Unterschale
- 3': Hülle
- 4: Cockpitansatz
- 5: Fenster
- 6: Panoramafenster
- 7: Linke vordere Antriebseinheit
- 8: Rechte vordere Antriebseinheit
- 9: Linke hintere Antriebseinheit
- 10: Rechte hintere Antriebseinheit
- 11: Linker vorderer Propeller
- 11': Propellerblätter
- 12: Rechter vorderer Propeller
- 12': Propellerblätter
- 13: Linker hinterer Propeller
- 13': Propellerblätter
- 14: Rechter vorderer Propeller
- 14': Propellerblätter
- 15: Linker vorderer oberer Querlenker
- 16: Linker vorderer unterer Querlenker
- 17: Linker vorderer Längslenker
- 18: Rechter vorderer oberer Querlenker
- 19: Rechter vorderer unterer Querlenker
- 20: Rechter vorderer Längslenker
- 21: Linker hinterer oberer Querlenker
- 22: Linker hinterer unterer Querlenker
- 23: Linker hinterer Längslenker
- 24: Rechter hinterer oberer Querlenker
- 25: Rechter hinterer unterer Querlenker
- 26: Rechter hinterer Längslenker
- 27: Versteifungsring
- 28: Oberes Stützprofil
- 29: Unteres Stützprofil
- 30: Ringförmige Wandung
- 31: Vordere Stützstruktur
- 32: Hintere Stützstruktur
- 33: Linke fachwerkartige Struktur
- 34: Rechte fachwerkartige Struktur
- 35: Antriebstragrahmen
- 36: Linke Schubstrebe
- 37: Rechte Schubstrebe
- 38: Passagierkabine
- 39: Gepäck- und Frachtraum
- 40: Schacht
- 41: Klappe
- 42: Zentralkörper
- 43: Ringwulst
- 44: Transportsteg
- 45: Transportsteg
- 46: Transportsteg
- 47: Korridor
- 48: Zugangsrampe
- 49: Linke vordere Antriebsmaschine
- 50: Rechte vordere Antriebsmaschine
- 51: Linke hintere Antriebsmaschine
- 52: Rechte hintere Antriebsmaschine
- 53: Vorderer Abschnitt
- 54: Vorderer Abschnitt
- 55: Hinterer Abschnitt
- 56: Hinterer Abschnitt
- 57: Balgartiger Ringwulst
- 58: Frachtraum
- 59: Ringwulst
- 60: Vordere Rampe
- 61: Hintere Rampe
- 62: Vorderer Korridor
- 63: Hinterer Korridor
- 64: Antriebstragrahmen
- 65: Öffnungen
- 66: Stützgerüst
- 67: Inneres Stützprofil
- 101: Vorderer Abschnitt
- 101': Längsachse von 101
- 102: Inneres zylindrisches Hilfstragrohr
- 103: Ringförmiger Abstandhalter
- 104: Abtriebswelle
- 104': Rotationsachse von 104
- 105: Lager
- 106: Kardanring
- 106': Schwenkachse von 106
- 107: Lagerbolzen
- 108: Lagerbolzen
- 109: Zylindrisches Tragrohr
- 109': Längsachse von 109
- 110: Propellernabe
- 111: Lagerlaschen
- 111': Neigungsachse von 111
- 112: Äußeres Kardangelenk
- 113: Propellerrotationsebene
- 114: Erstes unteres inneres Schwenklager
- 114': Zweites unteres inneres Schwenklager
- 115: Achse
- 115': Schwenkachse von 115
- 116: Schwenkzapfen
- 116': Schwenkachse von 116
- 117: Schwenkzapfen
- 117': Schwenkachse von 117
- 118: Verbindungswelle
- 119: Achse
- 119': Schwenkachse von 119
- 120: Erstes oberes inneres Schwenklager
- 120': Zweites oberes inneres Schwenklager
- 121: Propellerwelle
- 121': Rotationsachse von 121
- 122: Doppelkardangelenk
- 123: Planetengetriebe
- 124: Hohlrad
- 125: Propellerblatt
- 125': Propellerblatt
- 126: Obere Stellstange
- 126': Obere Stellstange
- 127: Taumelscheibe
- 128: Oberes Kugelgelenk
- 128': Oberes Kugelgelenk
- 129: Innerer Lagerring
- 130: Äußerer Lagerring
- 131: Unteres Kugelgelenk
- 131': Unteres Kugelgelenk
- 132: Untere Stellstange
- 132': Untere Stellstange
- 133: Kolben-Zylinder-Einheit
- 133': Kolben-Zylinder-Einheit
- 134: Untere Lagerlasche
- 134': Neigungsgelenk
- 135: Befestigungsanordnung
- 135': Kippachse von 135

## Patentansprüche

1. Luftfahrzeug mit einem im wesentlichen als aerostatischem Auftriebskörper ausgebildeten Rumpf (1) sowie am Rumpf (1) angelenkten, Antriebseinheiten (7, 8, 9, 10) bildenden kombinierten Auftriebs- und Vortriebseinrichtungen, die jeweils zwischen einer Auftriebsposition und einer Vortriebsposition kippbar sind,
wobei die kombinierten Auftriebs- und Vortriebseinrichtungen mit jeweils eine Propellernabe (110) aufweisenden Propellern (11, 12, 13, 14) versehen sind, deren jeweilige Propellerrotationsebene (113) zur Achse der jeweiligen Propellernabe (110) im wesentlichen senkrecht ist,
wobei der Anstellwinkel eines jeden Propellerblatts zyklisch individuell veränderbar ist,
wobei in der Auftriebsposition die jeweilige Propellerrotationsebene im wesentlichen horizontal und die die jeweilige Propellerwelle (121) beaufschlagende Abtriebswelle (104) einer zugeordneten Antriebseinrichtung (49, 50, 51, 52) im wesentlichen vertikal gelegen ist, und
wobei in der Vortriebsposition die jeweilige Propellerrotationsebene im wesentlichen vertikal und die die jeweilige Propellerwelle (121) beaufschlagende Abtriebswelle (104) der zugeordneten Antriebseinrichtung (49, 50, 51, 52) im wesentlichen horizontal gelegen ist,
**dadurch gekennzeichnet,**
- **daß** die jeweilige Propellerrotationsebene (113) mitsamt der Propellernabe (110) relativ zur die Propellerwelle (121) beaufschlagenden Abtriebswelle (104) der zugeordneten Antriebseinrichtung (49, 50, 51, 52) rundum neigbar ausgebildet ist,
- **daß** die Propellerwelle (121) und die die Propellerwelle (121) beaufschlagende Abtriebswelle (104) des Antriebs so gelenkig miteinander verbunden sind, daß die Propellerwelle (121) gleichförmig mit der Abtriebswelle (104) umläuft, und
- **daß** die Propellernabe (110) bezüglich der Antriebseinrichtung (49, 50, 51 52) kardanisch gelagert ist, um die Übertragung des Drehmoments von der Übertragung aller translatorischen Kräfte zu entkoppeln.

2. Luftfahrzeug nach Anspruch 1,
**dadurch gekennzeichnet,**
**daß** der Rumpf (1) zugleich als aerodynamischer Auftriebskörper gestaltet ist;
wobei vorzugsweise zudem oder alternativ keine vom Flugstaudruck abhängigen aktiv betätigbaren aerodynamischen Steuervorrichtungen vorgesehen sind;
wobei bevorzugt ist,
**daß** der Rumpf (1) einen im wesentlichen kreisförmigen Grundriß aufweist;
wobei vorzugsweise
der Rumpf (1) einen im wesentlichen elliptischen Querschnitt aufweist.

3. Luftfahrzeug nach Anspruch 1 oder 2,
**dadurch gekennzeichnet,**
**daß** der Rumpfquerschnitt eine asymmetrische Gestalt aufweist, die im wesentlichen durch eine obere und eine untere Halbellipse bestimmt ist, wobei der obere Teil eine Oberschale (2) bildet, die stärker gewölbt ist als der flachere, eine Unterschale (3) bildende untere Teil.

4. Luftfahrzeug nach einem der Ansprüche 1 bis 3,
**dadurch gekennzeichnet,**
**daß** der Rumpf (1) zumindest einen felgenartigen Versteifungsring (27) im Äquatorialbereich aufweist;
wobei vorzugsweise
der Versteifungsring (27) im Querschnitt an seinem Außenumfang eine teilelliptische Gestalt aufweist;
wobei zudem oder alternativ bevorzugt ist,
**daß** der Versteifungsring (27) einen Faserverbundwerkstoff, vorzugsweise in Sandwichbauweise, aufweist;
wobei weiter vorzugsweise
druckfeste Stützprofile (28, 29) in den Versteifungsring (27) integriert sind;
wobei weiter bevorzugt ist,
**daß** der Versteifungsring (27) zumindest ein Stützgerüst (66) aufweist, das im Querschnitt bevorzugt im wesentlichen dreieckig ausgebildet ist und
wobei vorzugsweise
das Stützgerüst (66) zumindest teilweise in den Versteifungsring (27) integriert ist.

5. Luftfahrzeug nach einem der vorhergehenden Ansprüche,
**dadurch gekennzeichnet,**
**daß** jeweils zwei Antriebseinheiten (7, 8; 9, 10) gemeinsam an einer vorzugsweise unstarr am Rumpf (1) angebrachten Stützstruktur (31; 32) gehaltert sind;
wobei bevorzugt ist,
**daß** die Antriebseinheiten (7, 8, 9, 10) und/oder deren Stützstrukturen (31, 32) über Schubstreben (36, 37) zu einem Antriebstragrahmen (35; 64) unstarr miteinander verkoppelt sind;
wobei auch bevorzugt ist,
**daß** die Antriebseinheiten (7, 8, 9, 10) und/oder deren Stützstrukturen (31, 32) über den Antriebstragrahmen (35; 64) am felgenartigen Versteifungsring (27) unstarr angebracht sind;
wobei vorzugsweise
die vorderen Antriebseinheiten (7, 8) und die hinteren Antriebseinheiten (9, 10) jeweils unterschiedlich weit von der Längsmittelebene des Luftfahrzeugs beabstandet sind;
wobei weiter vorzugsweise
die vorderen Antriebseinheiten (7, 8) und die hinteren Antriebseinheiten (9, 10) jeweils unterschiedlich hoch am Luftfahrzeug angeordnet sind und
wobei vorzugsweise
zumindest vier Antriebseinheiten (7, 8, 9, 10) vorgesehen sind.

6. Luftfahrzeug nach einem der vorhergehenden Ansprüche,
**dadurch gekennzeichnet,**
**daß** in jeder Antriebseinheit (7, 8, 9, 10) zwei parallel zueinander betreibbare Antriebsmaschinen vorgesehen sind.

7. Luftfahrzeug nach einem der vorhergehenden Ansprüche,
**dadurch gekennzeichnet,**
**daß** im unteren Bereich des Rumpfes (1) ein Frachtraum (58) ausgebildet ist;
wobei vorzugsweise
der Frachtraum (58) mit zumindest einer Rampe versehen ist und daß vorzugsweise zwei Rampen (60, 61) an zwei voneinander abgewandten Seiten vorgesehen sind und
wobei auch vorzugsweise
unter dem Frachtraum (58) im Bereich seines Umfangs ein nach unten gerichteter balgartiger Ringwulst (57) als Landefuß vorgesehen ist, der pneumatisch ausfahrbar ausgebildet ist.

8. Luftfahrzeug nach einem der Ansprüche 1 bis 7,
**dadurch gekennzeichnet,**
**daß** im vorderen Teil des Äquatorialbereichs des Rumpfes (1) eine bevorzugt abschnittsweise zweistöckig ausgebildete Passagierkabine (38) vorgesehen ist;
wobei vorzugsweise
die Passagierkabine (38) in den felgenartigen Versteifungsring (27) und vorzugsweise auch in die vordere Stützstruktur (31) eines Antriebstragrahmens (35) eingehängt ist;
wobei vorzugsweise
im hinteren Teil des Äquatorialbereichs des Rumpfes (1) ein Gepäck- und Frachtraum (39) vorgesehen ist;
wobei weiter bevorzugt ist,
**daß** der Gepäck- und Frachtraum (39) in den felgenartigen Versteifungsring (27) und vorzugsweise auch in die hintere Stützstruktur (32) des Antriebstragrahmens (35) eingehängt ist;
wobei vorzugsweise auch
in der Unterschale (3) ein in diese integrierter Zentralkörper (42) vorgesehen ist, an dessen Unterseite bevorzugt ein balgartiger, pneumatisch ausfahrbarer Ringwulst (43) als Landefuß ausgebildet ist;
wobei vorzugsweise
der Zentralkörper (42) in der von der Oberschale (2) und von der Unterschale (3) gebildeten Hüllenstruktur des Rumpfes (1) derart aufgehängt ist, daß er bei einer harten Landung nach oben einfedern kann und so ein Durchfedern von Passagierkabine (38), Gepäck- und Frachtraum (39) und Antriebstragrahmen (35) gestattet;
wobei auch von Vorzug ist,
**daß** der Zentralkörper (42) mit zumindest einer Rampe (48) für den Zugang von außen versehen ist und
wobei vorzugsweise
die Passagierkabine (38) und der Gepäck- und Frachtraum (39) über ummantelte Transportstege (44, 45, 46) mit dem Zentralkörper (42) unstarr verbunden sind, um dessen Einfedern zu ermöglichen.

9. Luftfahrzeug nach einem der vorhergehenden Ansprüche,
**dadurch gekennzeichnet,**
**daß** der Rumpf (1) eine Tragstruktur und eine Rumpfhülle (2', 3') aufweist und daß die Rumpfhülle (2') zumindest abschnittsweise im Bereich der Oberschale (2) beheizbar ist;
wobei vorzugsweise
die beheizbaren Abschnitte der Rumpfhülle (2') doppelwandig (2', 2") ausgebildet sind und von Warmluft oder einem anderen bezüglich der Rumpfumgebung wärmeren Gas bedarfsweise durchströmt werden.

10. Luftfahrzeug nach einem der vorhergehenden Ansprüche,
**dadurch gekennzeichnet,**
**daß** eine zentrale, vorzugsweise digitale Regelung für die individuelle und für die kollektive Ansteuerung der Anstellwinkel der Propellerblätter ((11', 12', 13', 14') aller Antriebseinheiten (7, 8, 9, 10) zur Fluglageregelung und zur Flugsteuerung im vertikalen Start- und Landebetrieb, im horizontalen Reiseflugbetrieb und im Übergangsbetrieb zwischen diesen beiden Betriebszuständen vorgesehen ist;
wobei vorzugsweise
zusätzlich eine manuelle Flugsteuerung vorgesehen ist.

11. Luftfahrzeug nach einem der vorhergehenden Ansprüche
**dadurch gekennzeichnet,**
**daß** die Nabe (110) des Propellers über einen Kardanring (106) kardanisch gelagert ist;
wobei vorzugsweise
die Propellerblätter (125, 125') ohne Schlaggelenke und ohne Schwenkgelenke oder andere dazu äquivalent wirkende elastische Teile an der zugeordneten Propellernabe (110) angeordnet sind;
wobei weiter bevorzugt ist,
**daß** der Anstellwinkel der einzelnen Propellerblätter (125, 125') mittels einer Taumelscheibe (127) kollektiv sowie zur Neigung der Propellerrotationsebene (113) individuell variabel zyklisch verstellbar ist;
wobei vorzugsweise
der Neigungswinkel der Propellerrotationsebene (113) bezüglich der die Propellerwelle (121) beaufschlagenden Abtriebswelle (104) des zugeordneten Antriebs um bis zu mehr als ± 45° beträgt;
wobei auch bevorzugt ist,
**daß** ein Kippmechanismus (135) zur Halterung der Antriebseinheit an einem Fahrzeug vorgesehen ist, der ein Kippen der Antriebseinheit um eine Kippachse (135') zwischen einer Auftriebsposition, in der die Abtriebswelle (104) im wesentlichen vertikal ausgerichtet ist, und einer Vortriebsposition, in der die Abtriebswelle (104) im wesentlichen horizontal ausgerichtet ist, gestattet;
wobei vorzugsweise
eine Nachführeinrichtung vorgesehen ist, welche einer sich aufgrund am Propeller angreifenden fluiddynamischer Kräfte und daraus resultierender Kreiselkräfte ergebenden Kippbewegung der Antriebseinheit, insbesondere der Propellerrotationsebene, folgt und welche diese Kippbewegung vorzugsweise reaktionskraftfrei unterstützt und wobei vorzugsweise
die Propellernabe (110) in einem einachsigen Neigungsgelenk (134') gelagert ist, dessen Neigungsachse (111') zur Kippachse (135') der Antriebseinheit senkrecht verläuft, so daß die Neigbarkeit der Propellernabe (110) um die Neigungsachse (111') gemeinsam mit der Kippbarkeit der Antriebseinheit um die Kippachse (135') der Antriebseinheit eine Neigung der Propellerrotationsebene (113) in alle Richtungen gestattet, wobei die Stellgeschwindigkeit der Nachführeinrichtung für die Kippbewegung um die Kippachse (135') der Antriebseinheit der Stellgeschwindigkeit der fluiddynamisch induzierten Neigungsbewegung der Propellerrotationsebene (113) im wesentlichen entspricht.

12. Luftfahrzeug nach einem der vorhergehenden Ansprüche,
**dadurch gekennzeichnet,**
**daß** in die Propellernabe (110) ein bevorzugt in Planetengetriebebauweise ausgeführtes Untersetzungsgetriebe (123) integriert ist, das von der Abtriebswelle (104) des Antriebs, vorzugsweise über das Doppelkardangelenk (122) oder das Gleichlaufgelenk, rotationsbeaufschlagt ist und das die Drehzahl der Abtriebswelle (104) reduziert an die Propellernabe (110) abgibt.

13. Verfahren zur Steuerung eines Luftfahrzeugs mit Propellerantrieb in allen Flugphasen,
wobei der Anstellwinkel der einzelnen Propellerblätter (125, 125') eines jeden Propellers zyklisch individuell eingestellt wird,
**dadurch gekennzeichnet,**
**daß** die Propellerrotationsebene (113) durch die zyklisch individuelle Einstellung der einzelnen Propellerblätter (125, 125') eines jeden Propellers, induziert durch aerodynamische Kräfte und durch aus diesen resultierende Kreiselkräfte, bezüglich der die Propellerwelle (121) beaufschlagenden Abtriebswelle (104) zur Richtungsbeeinflussung des Schubvektors reaktionskraftfrei geneigt wird.

## Claims

1. An aircraft with a fuselage (1) designed essentially as an aerostatic lift body and with combined lift and propulsion devices which are articulated on the fuselage (1) and form propulsion units (7, 8, 9, 10) and which in each case are tiltable between a lift position and a propulsion position
the combined lift and propulsion devices being provided with propellers (11, 12, 13, 14) which each have a propeller hub (110) and the respective propeller rotation plane (113) of which is essentially perpendicular to the axis of the respective propeller hub (110),
the angle of incidence of each propeller blade being cyclically variable individually,
in the lift position, the respective propeller rotation plane being essentially horizontal and the output shaft (104) of an associated drive device (49, 50, 51, 52), said output shaft acting on the respective propeller shaft (121), being essentially vertical, and
in the propulsion position, the respective propeller rotation plane being essentially vertical and the output shaft (104) of the associated drive device (49, 50, 51, 52), said output shaft acting on the respective propeller shaft (121), being essentially horizontal,
**characterized in that**
- the respective propeller rotation plane (113), together with the propeller hub (110), is designed with all-round inclinability relative to the output shaft (104) of the associated drive device (49, 50, 51, 52), said output shaft acting on the propeller shaft (121),
- the propeller shaft (121) and the drive output shaft (104) acting on the propeller shaft (121) are connected to one another in an articulated manner in such a way that the propeller shaft (121) rotates uniformly with the output shaft (104), and
- the propeller hub (110) is cardanically mounted with respect to the drive device (49, 50, 51, 52), in order to uncouple the transmission of the torque from the transmission of all the translational forces.

2. The aircraft as claimed in claim 1,
- wherein the fuselage (1) is designed at the same time as an aerodynamic lift body;
- wherein, preferably additionally or alternatively, no actively actuable aerodynamic control devices dependent on the dynamic pressure in flight are provided;
- wherein it is preferred that the fuselage (1) has an essentially circular plan;
- wherein, preferably, the fuselage (1) has an essentially elliptic cross section.

3. The aircraft as claimed in claim 1 or 2,
wherein the fuselage cross section has an asymmetric design which is determined essentially by an upper and a lower semiellipse, the upper part forming an upper shell (2) which is curved to a greater extent than the flatter lower part forming a lower shell (3).

4. The aircraft as claimed in one of claims 1 to 3,
- wherein the fuselage (1) has at least one rim-like reinforcing ring (27) in the equatorial region;
- wherein the reinforcing ring (27) preferably has, in cross section, a part-elliptic shape on its outer circumference;
- wherein it is preferred additionally or alternatively that the reinforcing ring (27) has a composite fiber material, preferably of the sandwich type;
- wherein, further preferably, pressure-resistant supporting profiles (28, 29) are integrated into the reinforcing ring (27);
- wherein it is further preferred that the reinforcing ring (27) has at least one supporting skeleton (66) which, in cross section, is preferably of essentially triangular design and
- wherein, preferably, the supporting skeleton (66) is at least partially integrated into the reinforcing ring (27).

5. The aircraft as claimed in one of the preceding claims,
- wherein, in each case, two propulsion units (7, 8; 9, 10) are jointly mounted on a supporting structure (31; 32) preferably attached nonrigidly to the fuselage (1) ;
- wherein it is preferred that the propulsion units (7, 8, 9, 10) and/or their supporting structures (31, 32) are coupled nonrigidly to one another via thrust struts (36, 37) to form a propulsion support frame (35; 64) ;
- wherein it is also preferred that the drive units (7, 8, 9, 10) and/or their supporting structures (31, 32) are attached nonrigidly to the rim-like reinforcing ring (27) via the propulsion support frame (35; 64);
- wherein, preferably, the front propulsion units (7, 8) and the rear propulsion units (9, 10) are in each case at a different distance from the longitudinal center plane of the aircraft;
- wherein, further preferably, the front propulsion units (7, 8) and the rear propulsion units (9, 10) are in each case arranged at different heights on the aircraft and
- wherein, preferably, at least four propulsion units (7, 8, 9, 10) are provided.

6. The aircraft as claimed in one of the preceding claims, wherein two engines capable of being operated in parallel with another are provided in each propulsion unit (7, 8, 9, 10).

7. The aircraft as claimed in one of the preceding claims,
- wherein a cargo compartment (58) is designed in the lower region of the fuselage (1);
- wherein, preferably, the cargo compartment (58) is provided with at least one ramp, and wherein preferably two ramps (60, 61) are provided on two sides facing away from one another and
- wherein, also preferably, a downwardly directed bellows-like annular bead (57), which is designed to be pneumatically extendable, is provided as a landing foot below the cargo compartment (58) in the region of the circumference of the latter.

8. The aircraft as claimed in one of claims 1 to 7,
- wherein a passenger cabin (38) preferably having a two-story design in places is provided in the front part of the equatorial region of the fuselage (1);
- wherein, preferably, the passenger cabin (38) is suspended in the rim-like reinforcing ring (27) and preferably also in the front supporting structure (31) of a propulsion support frame (35);
- wherein, preferably, a baggage and freight compartment (39) is provided in the rear part of the equatorial region of the fuselage (1);
- wherein it is further preferred that the baggage and freight compartment (39) is suspended in the rim-like reinforcing ring (27) and preferably also in the rear supporting structure (32) of the propulsion support frame (35) ;
- wherein there is preferably also provided in the lower shell (3) a central body (42) which is integrated into the latter and on the underside of which preferably a bellows-like pneumatically extendable annular bead (43) is designed as a landing foot;
- wherein, preferably, the central body (42) is suspended in the envelope structure of the fuselage (1), said envelope structure being formed by the upper shell (2) and by the lower shell (3), in such a way that, in the event of a hard landing, said central body can spring upward and thus makes it possible to cushion the passenger cabin (38), baggage and freight compartment (39) and propulsion support frame (35);
- wherein it is also preferred that the central body (42) is provided with at least one ramp (48) for access from outside; and
- wherein, preferably, the passenger cabin (38) and the baggage and freight compartment (39) are connected nonrigidly, via encased transport links (44, 45, 46), to the central body (42) in order to make it possible for the latter to exert a springing action.

9. The aircraft as claimed in one of the preceding claims,
- wherein the fuselage (1) has a support structure and a fuselage envelope (2', 3'), and wherein the fuselage envelope (2') is heatable, at least in portions, in the region of the upper shell (2);
- wherein, preferably, the heatable portions of the fuselage envelope (2') are of double-walled (2', 2") design and have flowing through them, as required, warm air or another gas which is warmer than the fuselage surroundings.

10. The aircraft as claimed in one of the preceding claims,
- wherein a central, preferably digital control is provided for the individual and collective control of the angles of incidence of the propeller blades (11', 12', 13', 14') of all the propulsion units (7, 8, 9, 10) for flight attitude control and flight control in the vertical take-off and landing mode, in the horizontal cruising mode and in the transitional mode between these two operating states;
- wherein, preferably, manual flight control is additionally provided.

11. The aircraft as claimed in one of the preceding claims **characterized in that**
- the hub (110) of the propeller is cardanically mounted via a cardan ring (106);
- wherein, preferably, the propeller blades (125, 125') are arranged on the associated propeller hub (110) without flapping hinges and without lag hinges or other elastic parts acting in an equivalent way to these;
- wherein it is further preferred that, by means of a swashplate (127), the angle of incidence of the individual propeller blades (125, 125') is cyclically adjustable collectively as well as individually variably relative to the inclination of the propeller rotation plane (113);
- wherein, preferably, the angle of inclination of the propeller rotation plane (113) relative to the output shaft (104) of the associated drive, said output shaft acting on the propeller shaft (121), is up to more than ±45°;
- wherein it is also preferred that a tilting mechanism (135) for mounting the propulsion unit on a craft is provided, said tilting mechanism allowing the propulsion unit to tilt about a tilting axis (135') between a lift position, in which the output shaft (104) is oriented essentially vertically, and a propulsion position, in which the output shaft (104) is oriented essentially horizontally;
- wherein, preferably, a tracking device is provided, which follows a tilting movement of the propulsion unit, in particular of the propeller rotation plane, occuring due to fluid-dynamic forces acting on the propeller and to resultant gyroscopic forces, and which assists this tilting movement, preferably without any reaction force; and
- wherein, preferably, the propeller hub (110) is mounted in a uniaxial inclination joint (134'), the inclination axis (111') of which runs perpendicular to the tilting axis (135') of the propulsion unit, so that the inclinability of the propeller hub (110) about the inclination axis (111'), together with the tiltability of the propulsion unit about the tilting axis (135') of the propulsion unit, allows the propeller rotation plane (113) to be inclined in all directions, the adjusting speed of the tracking device for the tilting movement about the tilting axis (135') of the propulsion unit essentially corresponding to the adjusting speed of the fluid-dynamically induced inclination movement of the propeller rotation plane (113).

12. The aircraft as claimed in one of the preceding claims, **characterized in that**
there is integrated into the propeller hub (110) a reduction gear (123) which is preferably designed in the manner of a planetary gear and which is acted upon rotationally by the output shaft (104) of the drive, preferably via the double cardan joint (122) or the synchronous joint, and which transmits the rotational speed of the output shaft (104), reduced, to the propeller hub (110).

13. A method for controlling a propeller driven aircraft in all flight phases,
wherein the angle of incidence of the individual propeller blades (125, 125') of each propeller being cyclically set individually,
**characterized in that**
the propeller rotation plane (113) is inclined without any reaction force by the cyclical individual setting of the individual propeller blades (125, 125') of each propeller, said inclination being induced by aerodynamic forces and gyroscopic forces resulting from these, with respect to the output shaft (104) acting on the propeller shaft (121), in order to influence the direction of the thrust vector.

## Revendications

1. Aéronef comportant un fuselage (1) réalisé sensiblement sous forme de corps aérostatique de sustentation ainsi que des dispositifs de sustentation et de propulsion combinés, articulés sur le fuselage (1) et formant des unités d'entraînement (7, 8, 9, 10), qui sont susceptibles d'être basculés entre une position de sustentation et une position de propulsion,
dans lequel les dispositifs de sustentation et de propulsion combinés sont pourvus d'hélices (11, 12, 13, 14) comprenant chacune un moyeu d'hélice (110), dont le plan de rotation respectif (113) de l'hélice est sensiblement perpendiculaire à l'axe du moyeu d'hélice respectif (110),
dans lequel l'angle d'incidence de chaque pale d'hélice est variable individuellement de façon cyclique,
dans lequel, dans la position de sustentation, le plan de rotation respectif de l'hélice est situé sensiblement horizontalement et l'arbre mené (104), attaquant l'arbre d'hélice respectif (121), d'un dispositif d'entraînement associé (49, 50, 51, 52) est situé sensiblement verticalement, et
dans lequel, dans la position de propulsion, le plan de rotation respectif de l'hélice est situé sensiblement verticalement et l'arbre mené (104), attaquant l'arbre d'hélice respectif (121), du dispositif d'entraînement associé (49, 50, 51, 52) est situé sensiblement horizontalement,
**caractérisé en ce que**
- le plan de rotation respectif (113) de l'hélice, y compris le moyeu d'hélice (110), est réalisé avec faculté d'inclinaison tout autour par rapport à l'arbre mené (104), attaquant l'arbre d'hélice (121), du dispositif d'entraînement associé (49, 50, 51, 52),
- l'arbre d'hélice (121) et l'arbre mené (104), attaquant l'arbre d'hélice (121), de l'entraînement sont reliés en articulation l'un à l'autre, de telle sorte que l'arbre d'hélice (121) tourne uniformément avec l'arbre mené (104), et **en ce que**
- le moyeu d'hélice (110) est monté à la Cardan par rapport au dispositif d'entraînement (49, 50, 51, 52), afin de découpler la transmission du couple de rotation par rapport à la transmission de toutes les forces de translation.

2. Aéronef selon la revendication 1, **caractérisé en ce que** le fuselage (1) est réalisé simultanément sous forme de corps de sustentation aérodynamique;
dans lequel, de préférence, aucun dispositif de commande aérodynamique actionnable par voie active et dépendant de la pression dynamique de vol n'est prévu en supplément ou en variante;
dans lequel le fuselage (1) présente de préférence un contour de base essentiellement circulaire;
et dans lequel le fuselage (1) présente de préférence une section sensiblement elliptique.

3. Aéronef selon l'une ou l'autre des revendications 1 et 2, **caractérisé en ce que** la section du fuselage présente une forme asymétrique qui est déterminée sensiblement par une demi-ellipse supérieure et par une demi-ellipse inférieure, la partie supérieure formant une coque supérieure (2) qui est bombée plus fortement que la partie inférieure plus plate formant une coque inférieure (3).

4. Aéronef selon l'une des revendications 1 à 3,
**caractérisé en ce que**
- le fuselage (1) comprend au moins un anneau de rigidification (27) en forme de chante dans la zone équatoriale;
- l'anneau de rigidification (27) présente de préférence une forme partiellement elliptique en section sur sa périphérie extérieure;
- l'anneau de rigidification (27) présente de préférence en supplément ou en variante un matériau composite de fibres, de préférence de mode de construction en sandwich;
- en outre des profilés d'appui (28, 29) résistants à la pression sont de préférence intégrés dans l'anneau de rigidification (27);
- de plus, l'anneau de rigidification (27) comprend de préférence une ossature de soutien (66) qui est réalisée en section de préférence sensiblement en forme triangulaire; et
- l'ossature de soutien (66) est de préférence au moins partiellement intégrée dans l'anneau de rigidification (27).

5. Aéronef selon l'une des revendications précédentes,
**caractérisé en ce que**
- deux unités d'entraînement respectives (7, 8; 9, 10) sont montées conjointement sur une structure de soutien (31; 32) agencée de préférence de façon non rigide sur le fuselage (1) ;
- les unités d'entraînement (7, 8, 9, 10) et/ou leurs structures de soutien (31, 32) sont de préférence accouplées les unes aux autres de façon non rigide via des entretoises de poussée (36, 37) pour former un cadre porteur d'entraînement (35; 64);
- les unités d'entraînement (7, 8, 9, 10) et/ou leurs structures de soutien (31, 32) sont de préférence agencées de façon non rigide sur l'anneau de rigidification (27) en forme de chante via le cadre porteur d'entraînement (35; 64);
- les unités d'entraînement avant (7, 8) et les unités d'entraînement arrière (9, 10) sont distantes chacune de préférence à des distances différentes du plan central longitudinal de l'aéronef;
- les unités d'entraînement avant (7, 8) et les unités d'entraînement arrière (9, 10) sont agencées de préférence à des hauteurs différentes sur l'aéronef; et
- il est prévu de préférence au moins quatre unités d'entraînement (7, 8, 9, 10).

6. Aéronef selon l'une des revendications précédentes, **caractérisé en ce que** dans chaque unité d'entraînement (7, 8, 9, 10) sont prévus deux moteurs d'entraînement susceptibles de fonctionner en parallèle l'un avec l'autre.

7. Aéronef selon l'une des revendications précédentes, **caractérisé en ce que**
- une soute cargo (58) est réalisée dans la zone inférieure du fuselage (1);
- la soute cargo (58) est pourvue de préférence d'au moins une rampe, et **en ce qu'**il est prévu de préférence deux rampes (60, 61) sur deux côtés détournés l'un de l'autre,
- et de préférence un bourrelet annulaire (57) en forme de soufflet dirigé vers le bas est prévu à titre de pied d'atterrissage au-dessous de la soute cargo (58) dans la zone de sa périphérie, ledit pied étant réalisé déployable par voie pneumatique.

8. Aéronef selon l'une des revendications 1 à 7, **caractérisé en ce que**
- dans la partie avant de la zone équatoriale du fuselage (1), il est prévu une cabine de passagers (38) réalisée de préférence localement à deux étages;
- la cabine de passagers (38) est accrochée de préférence dans l'anneau de rigidification (27) en forme de chante et de préférence également dans la structure de soutien avant (31) d'un cadre porteur d'entraînement (35);
- dans la partie arrière de la zone équatoriale du fuselage (1), il est prévu de préférence une soute à bagages et à marchandises (39) ;
- la soute à bagages et à marchandises (39) est accrochée de préférence dans l'anneau de rigidification (27) en forme de chante et de préférence également dans la structure de soutien arrière (32) du cadre porteur d'entraînement (35);
- dans la coque inférieure (3) est prévu de préférence également un corps central (42) intégré dans celle-ci, sur la face inférieure duquel est réalisé de préférence un bourrelet annulaire (43) en forme de soufflet, déployable par voie pneumatique à titre de pied d'atterrissage;
- le corps central (42) est de préférence suspendu dans la structure enveloppe du fuselage (1) formée par la coque supérieure (2) et par la coque inférieure (3), de telle sorte que lors d'un atterrissage brutal il peut se débattre vers le haut et permet ainsi une suspension de la cabine des passagers (38), de la soute à bagages et à marchandises (39) et du cadre porteur d'entraînement (35);
- de préférence le corps central (42) est pourvu d'au moins une rampe (48) pour l'accès depuis l'extérieur, et
- de préférence la cabine de passagers (38) et la soute à bagages et à marchandises (39) sont reliées de façon non rigide au corps central (42) via des barrettes de transport enveloppées (44, 45, 46), afin de permettre son débattement.

9. Aéronef selon l'une des revendications précédentes, **caractérisé en ce que**
- le fuselage (1) comprend une structure porteuse et une enveloppe de fuselage (2', 3'), et **en ce que** l'enveloppe de fuselage (2') est susceptible d'être chauffée du moins localement dans la zone de la coque supérieure (2);
- de préférence, les tronçons susceptibles d'être chauffés de l'enveloppe de fuselage (2') sont réalisés à paroi double (2', 2'') et sont traversés en cas de besoin par de l'air chaud ou par un autre gaz plus chaud par rapport à l'environnement du fuselage.

10. Aéronef selon l'une des revendications précédentes, **caractérisé en ce que**
- il est prévu une régulation centrale de préférence numérique pour le pilotage individuel ou pour le pilotage collectif des angles d'incidence des pales d'hélice (11', 12', 13', 14') de toutes les unités d'entraînement (7, 8, 9, 10) pour la régulation de la position de vol et pour la commande de vol pendant le fonctionnement de démarrage et d'atterrissage vertical, pendant le fonctionnement en vol de croisière horizontal et pendant le fonctionnement de transition entre ces deux états de fonctionnement;
- de préférence, il est prévu en supplément une commande de vol manuelle.

11. Aéronef selon l'une des revendications précédentes, **caractérisé en ce que**
- le moyeu (110) de l'hélice est monté à la Cardan via un anneau de Cardan (106);
- de préférence, les pales d'hélice (125, 125') sont agencées sur le moyeu d'hélice associé (110) sans axes de levée de pale et sans axes de traînée ou d'autres pièces élastiques agissant de façon équivalente;
- de préférence, l'angle d'incidence des pales d'hélice individuelles (125, 125') est cycliquement réglable de façon variable au moyen d'un plateau oscillant (127) collectivement et individuellement par rapport à l'inclinaison du plan de rotation (113) de l'hélice,
- de préférence, l'angle d'inclinaison du plan de rotation (113) de l'hélice par rapport à l'arbre menant (104), attaqutant l'arbre d'hélice (121), de l'entraînement associé s'élève jusqu'à plus de + 45°;
- de préférence, il est prévu un mécanisme pivotant (135) pour monter l'unité d'entraînement sur un véhicule, qui permet un pivotement de l'unité d'entraînement autour d'un axe de pivotement (135') entre une position de sustentation dans laquelle l'arbre mené (104) est orienté sensiblement verticalement, et une position de propulsion
dans laquelle l'arbre mené (104) est orienté sensiblement horizontalement;
- de préférence, il est prévu un dispositif suiveur qui suit un mouvement de pivotement de l'unité d'entraînement, en particulier du plan de rotation de l'hélice, qui résulte des forces dues à la dynamique des fluides et attaquant l'hélice et des forces giratoires qui en résultent, et qui assiste ce mouvement de pivotement de préférence sans force de réaction,
- le moyeu d'hélice (110) est monté dans une articulation d'inclinaison (134') à un seul axe, dont l'axe d'inclinaison (111') s'étend perpendiculairement à l'axe de pivotement (135') de l'unité d'entraînement, de sorte que la possibilité d'inclinaison du moyeu d'hélice (110) autour de l'axe d'inclinaison (111'), conjointement avec la possibilité de pivotement de l'unité d'entraînement autour de l'axe de pivotement (135'), permet à l'unité d'entraînement une inclinaison du plan de rotation (113) de l'hélice dans toutes les directions, la vitesse de positionnement du dispositif suiveur pour le mouvement de pivotement autour de l'axe de pivotement (135') de l'unité d'entraînement correspondant sensiblement à la vitesse de positionnement du mouvement d'inclinaison induit en raison de la dynamique des fluides du plan de rotation (113) de l'hélice.

12. Aéronef selon l'une des revendications précédentes, **caractérisé en ce que** dans le moyeu d'hélice (110) est intégré un mécanisme démultiplicateur (123) réalisé de préférence sous forme de transmission à planétaires qui est attaquée en rotation par l'arbre mené (104) de l'entraînement, de préférence via l'articulation à Cardan double (122) ou via le joint homocinétique, et qui transmet la vitesse de rotation de l'arbre mené (104) de façon réduite au moyeu d'hélice (110).

13. Procédé de commande d'un aéronef comportant un entraînement à hélice dans toutes les phases du vol, dans lequel l'angle d'incidence des pales d'hélice individuelles (125, 125') de chaque hélice est réglé individuellement de façon cyclique,
**caractérisé en ce que**
le plan de rotation (113) de l'hélice est incliné sans force de réaction par le réglage individuel cyclique des pales d'hélice individuelles (125, 125'), avec induction par les forces aérodynamiques et par des forces giratoires résultantes de celles-ci, par rapport à l'arbre mené (104) attaquant l'arbre d'hélice (121), pour influencer la direction du vecteur de poussée.
